(19) Europäisches Patentamt / European Patent Office / Office européen des brevets

(11) **EP 3 743 636 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.10.2025 Patentblatt 2025/43**

(45) Hinweis auf die Patenterteilung:
**18.01.2023 Patentblatt 2023/03**

(21) Anmeldenummer: **19702537.2**

(22) Anmeldetag: **21.01.2019**

(51) Internationale Patentklassifikation (IPC):
***F16D 66/02*** *(2006.01)* ***B60T 17/22*** *(2006.01)*

(52) Gemeinsame Patentklassifikation (CPC):
**F16D 66/021; B60T 17/22; F16D 65/092; G01B 7/06**

(86) Internationale Anmeldenummer:
**PCT/EP2019/051329**

(87) Internationale Veröffentlichungsnummer:
**WO 2019/145244 (01.08.2019 Gazette 2019/31)**

(54) **BELAGVERSCHLEISSMESSEINRICHTUNG FÜR EINE BREMSE, BREMSE UND BREMSBELAGSATZ**

BRAKE LINING WEAR MEASURING DEVICE FOR A BRAKE, BRAKE AND BRAKE LINING SET

DISPOSITIF DE MESURE DE L'USURE DES GARNITURES DE FREIN POUR UN FREIN, FREIN ET ENSEMBLE DE GARNITURES DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2018 DE 102018101579**

(43) Veröffentlichungstag der Anmeldung:
**02.12.2020 Patentblatt 2020/49**

(73) Patentinhaber: **KNORR-BREMSE Systeme für Nutzfahrzeuge GmbH**
**80809 München (DE)**

(72) Erfinder:
• **BLESSING, Michael**
**80687 München (DE)**
• **FUCHS, Alexander**
**70736 Fellbach (DE)**
• **KLUFTINGER, Andre**
**63924 Kleinheubach (DE)**
• **PAHLE, Wolfgang**
**83707 Bad Wiessee (DE)**
• **FRICKE, Jens**
**94474 Vilshofen (DE)**

(74) Vertreter: **Specht, Peter et al**
**Loesenbeck - Specht - Dantz**
**Patent- und Rechtsanwälte**
**Am Zwinger 2**
**33602 Bielefeld (DE)**

(56) Entgegenhaltungen:
| | |
|---|---|
| CN-A- 106 641 031 | DE-A1- 102014 105 561 |
| DE-A1- 4 231 107 | JP-A- H 109 307 |
| US-A1- 2006 254 868 | US-B1- 6 302 241 |
| US-B2- 8 739 938 | |

EP 3 743 636 B2

**Beschreibung**

Die Erfindung betrifft eine Belagverschleißmesseinrichtung für eine Bremse nach dem Oberbegriff des Anspruchs 1 und des Anspruchs 2. Eine solche Belagverschleißmesseinrichtung ist aus der JPH 10 93 07 A bekannt. Die Erfindung bezieht sich auch auf eine Bremse und einen Bremsbelagsatz.

Straßen- und Schienenfahrzeuge wie auch Industriemaschinen sind mit Scheiben- und Trommelbremsen zur Abbremsung von Bewegungen versehen. Bei Scheiben- und Trommelbremsen kommt eine Reibmasse zum Einsatz welche durch den Abbremsvorgang kontinuierlich verschleißt.

Aus diesem Verschleiß der Reibmasse von Bremsbelägen ergibt sich die Notwendigkeit, dass eine Verschleißnachstellvorrichtung die Änderung durch den Verschleiß ausgleicht und somit ein konstantes Lüftspiel einstellt. Ein konstantes Lüftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Ein Beispiel einer Verschleißnachstellvorrichtung einer Scheibenbremse, eine entsprechende Scheibenbremse und ein Verfahren zum Betreiben einer Verschleißnachstellvorrichtung sind in dem Dokument DE 10 2012 108 672 B3 beschrieben.

Es ist üblich, Bremsbeläge in bestimmten Wartungsintervallen zu prüfen und bei Erreichen einer Verschleißgrenze auszutauschen.

Zur Uberwachung des Verschleißes von Bremsbelägen sind viele verschiedene Vorschläge gemacht worden.

Ein Beispiel zur Illustration beschreibt das Dokument DE102011113526B4. Es wird ein kontinuierlich verschleißendes Widerstandelement beschrieben. Dieses gleicht einer Dreieckpyramide bei der die Spitze über einer der Grundflächenecken liegt. Bei zunehmendem Verschleiß ändert sich der elektrische Widerstand des Widerstandselementes.

Die Offenlegungsschrift DE4231107A1 betrifft einen kontinuierlichen Verschleißsensor und einen separaten, thermisch abhängigen Widerstand, welche im Belag platziert sind. Der kontinuierliche Verschleißsensor wird als Band ausgeführt, dessen Enden mit Pins verbunden sind. Die Pins dienen zusätzlich der Kontaktsensierung zwischen dem Belag und der Bremstrommel. Auch eine leitfähige Beschichtung auf einem Keramiksubstrat wird als Alternative für das Band angegeben. Der Sensor umfasst drei elektrische Anschlüsse, da sich das Verschleißband und der thermische Widerstand das Massekabel teilen.

EP1645771A2 beschreibt einen kontinuierlichen Verschleißsensor, welcher sich auch zur Temperaturmessung eignet. Der verschleißende Widerstand wird als bandförmiger Leiter ausgeführt. Durch den schwindenden Widerstandsquerschnitt und den sich ändernden Widerstand bei Temperaturänderung muss ein überlagertes Signal ausgewertet werden. Die Trennung der Signaleinflüsse ist durch unterschiedliche Messzeitpunkte möglich. Vor Fahrtbeginn, wenn die Bremsbeläge noch Umgebungstemperatur aufweisen, kann der Verschleiß ermittelt werden. Bei bekanntem Verschleiß kann während der Fahrt die Belagtemperatur ermittelt werden. Der Sensor umfasst elektrische zwei Anschlüsse.

Weitere Belagverschleißmesseinrichtungen sind aus den Offenlegungsschriften US8739938B2, DE4231107A1, DE102014105561A1, CN106641031A und US6302241B1 bekannt.

Daher besteht die Aufgabe der vorliegenden Erfindung darin, eine verbesserte Überwachung und Sensierung von Belagverschleiß zu schaffen, welche vereinfacht und mit einer verringerten Teilezahl auskommt, wobei gleichzeitig eine kostengünstige Konstruktion angestrebt ist.

Eine weitere Aufgabe ist es, eine verbesserte Bremse bereitzustellen.

Eine noch weitere Aufgabe besteht in der Schaffung eines verbesserten Bremsbelagsatzes. Eine Lösung der Aufgabe wird durch eine Belagverschleißmesseinrichtung nach Anspruch 1, 2, 3 oder 18 geschaffen.

Die weitere Aufgabe wird durch eine Bremse mit den Merkmalen des Anspruchs 19 gelöst.

Die noch weitere Aufgabe wird durch einen Bremsbelagsatz nach Anspruch 20 gelöst.

Ein Gedanke der Erfindung besteht darin, Eigenschaften der Reibmasse zu messen und den Verschleiß aus den Messergebnissen zu ermitteln.

Eine erfindungsgemäße Belagverschleißmesseinrichtung weist die Merkmale der Ansprüche 1, 2, 3 oder 18 auf.

Auf diese Weise kann jeweils eine kontinuierliche Verschleißmessung erfolgen, wodurch sich eine vorteilhafte Planung von Wartungszeiten ergibt.

Mittels dieser kontinuierlichen Verschleißmessung kann zudem eine so genannte intelligente Belagverschleißharmonisierung in einer Steuerung vorgenommen werden. Daraus ergibt sich der Vorteil, dass bei einem Werkstattbesuch bzw. bei Wartung alle Bremsbeläge an einem Fahrzeug "gleichen" Verschleiß aufweisen und somit komplett getauscht werden können. Die Anzahl der Werkstattbesuche wird somit reduziert.

Eine erfindungsgemäße Bremse, insbesondere für ein Kraftfahrzeug, umfasst mindestens einen Bremsbelag mit einer Belagrückenplatte, auf der eine Reibmasse aufgebracht ist, eine Zuspannvorrichtung und eine Belagverschleißmesseinrichtung, die nach einem der Ansprüche 1 bis 18 ausgebildet ist. Die Belagverschleißmesseinrichtung weist eine Auswerteeinheit mit einem erstenMessgerät auf, wobei das erste Messgerät mit der Reibmasse des mindestens einen Bremsbelags in Zusammenwirkung steht und eine Belagdicke der Reibmasse des mindestens einen Bremsbelags indirekt erfasst. Planbare Wartungszeiten ergeben eine erhöhte Einsatzfähigkeit der betreffenden Fahrzeuge und reduzieren Reparaturkosten, die sich aus nicht erkanntem Verschleiß ergeben können.

Ein erfindungsgemäßer Bremsbelagsatz für eine Bremse umfasst die Merkmale des Anspruchs 20. Mindestens einer der zwei Bremsbeläge ist so mit Kontaktbändern ausgebildet, dass eine elektrische Messung der Eigenschaften der Reibmasse ermöglicht ist.

Weitere vorteilhafte Ausgestaltungen sind in den Unteransprüchen angegeben.

Gemäß der unabhängigen Ansprüche 1, 2 und 3 ist das erste Messgerät zunächst mit der Reibmasse des mindestens einen Bremsbelags elektrisch leitend verbunden, als ein Widerstandsmessgerät ausgebildet und erfasst die Belagdicke der Reibmasse des mindestens einen Bremsbelags indirekt durch Messung eines elektrischen Widerstands der Reibmasse. Dies ist vorteilhaft, da sich der Widerstand der Reibmasse mit seiner Querschnittsfläche ändert. Hierdurch kann ein Rückschluss auf den Belagverschleiß gemacht werden. Zusätzliche verschleißende Bauteile sind nicht erforderlich. Weiterhin ist es von Vorteil, dass eine kontinuierliche Verschleißmessung möglich ist, welche den Verschleiß an jeder Stelle der Reibmasse berücksichtigt.

Das erste Messgerät ist mit der Reibmasse des mindestens einen Bremsbelags über mindestens zwei elektrische leitende Kontaktbänder elektrisch leitend verbunden. Dies ergibt einen einfachen und platzsparenden Aufbau.

Ein weiterer vorteilhafter Aufbau wird dadurch geschaffen, dass nach Anspruch 1 oder 4 die mindestens zwei elektrisch leitenden Kontaktbänder in oder/und an der Reibmasse des mindestens einen Bremsbelags angeordnet sind und mit der Reibmasse des mindestens einen Bremsbelags elektrisch leitend in Kontakt stehen.

Eine weitere Ausführung sieht vor, dass die Reibmasse des mindestens einen Bremsbelags und die Kontaktbänder durch eine Isolation gegenüber der Belagrückenplatte des mindestens einen Bremsbelags elektrisch isoliert angeordnet sind. Damit ist eine einfache elektrische Isolierung möglich.

Es ist vorteilhaft, wenn von den mindestens zwei Kontaktbändern jeweils eins in einem Seitenbereich der Reibmasse des mindestens einen Bremsbelags derart angeordnet ist, dass sich zwischen ihnen die Reibmasse in einer Längsrichtung des mindestens einen Bremsbelags erstreckt. Dies ist von Vorteil, da auf diese Weise ein elektrischer Widerstand der gesamten Reibmasse gemessen werden kann.

Für einen platzsparenden Aufbau ist es vorteilhaft, dass nach Anspruch 1 oder 7 jedes Kontaktband einen Körper, einen Anschlussabschnitt und eine elektrisch leitende Kontaktfläche, welche mit der Reibmasse in elektrisch leitendem Kontakt steht, aufweist.

Eine noch weitere Ausführung nach Anspruch 1 oder 8 sieht vor, dass der Anschlussabschnitt eines jeden Kontaktbandes an einem oberen Ende des Körpers, welches von der Reibmasse hervorsteht, angeordnet und elektrisch leitend mit der Kontaktfläche verbunden ist. Damit ist ein einfacher elektrischer Anschluss möglich.

Für einen noch weiter vereinfachten Anschluss ist es von Vorteil, dass nach Anspruch 1 oder 9 der Anschlussabschnitt eines jeden Kontaktbandes als Stecker (z.B. für eine Flachsteckverbindung) ausgeformt ist oder in stoffschlüssiger Verbindung mit einer jeweiligen Anschlussleitung, die mit dem ersten Messgerät elektrisch leitend verbunden ist, steht.

Nach Anspruch 1 oder 10 weisen die Kontaktflächen der Kontaktbänder jeweils Löcher als Durchgangsöffnungen in den Kontaktbändern, eine aufgeraute Bandoberfläche und/oder hervorstehende Vorsprünge auf, welche mit der Reibmasse in elektrisch leitendem Kontakt stehen. Dies ergibt eine vorteilhaft gute elektrische Verbindung zur Reibmasse.

Wenn die Kontaktbänder jeweils in einer Ausnehmung als Vertiefung in eine Belagseite der Belagrückenplatte oder/und jeweils in einer Ausnehmung in der Reibmasse eingesetzt sind, ergibt sich ein vorteilhafter platzsparender Aufbau.

Nach Anspruch 2 oder 12 ist vorgesehen, dass mindestens ein weiteres Kontaktband in Längsrichtung der Reibmasse zwischen den mindestens zwei Kontaktbändern angeordnet ist. Durch eine mittige Platzierung eines weiteren, dritten Kontaktbands kann über den Widerstandsunterschied (vom linken zum mittleren und vom mittleren zum rechten Kontaktband) ein auftretender Schrägverschleiß vorteilhaft erkannt werden.

Eine Weiterbildung der Belagverschleißmesseinrichtung sieht vor, dass die Belagverschleißmesseinrichtung ein zweites Messgerät umfasst, wobei das zweite Messgerät eine Verstärkerschaltung und/oder eine Vergleicherschaltung aufweist. Damit ist es vorteilhaft möglich, dass ein mit dem ersten Messgerät gemessener Widerstandswert mit einem vorher festgelegten Widerstandswert verglichen werden kann. Somit ist es nicht erforderlich, eine solche Vergleicherschaltung in einer Steuerung, z.B. in einem Bremssteuergerät, zu ergänzen. Eine Verstärkerschaltung bietet zudem den Vorteil, dass die Signalstärke angehoben werden kann, wobei auch gleichzeitig Störsignale unterdrückt werden können.

Die Belagverschleißmesseinrichtung kann auch eine Anzeige umfassen, welche Warnsignale optisch, akustisch, haptisch anzeigen kann.

Eine noch andere Ausführung sieht vor, dass die Belagverschleißmesseinrichtung eine Auswerteschaltung zur Ermittlung einer Temperatur der Reibmasse aus den gemessenen Widerstandswerten der Reibmasse aufweist. Da sich der Widerstand der Reibmasse mit der Temperatur ändert, kann hierdurch vorteilhaft ein Rückschluss auf die Temperatur in der Reibmasse gemacht werden.

Nach Anspruch 3 oder 16 ist mindestens eins der Kontaktbänder mit einem Thermoelementkabel mit dem ersten Messgerät verbunden, wobei die Belagverschleißmesseinrichtung eine Auswerteschaltung zur Ermittlung einer Temperatur der Reibmasse aus den von dem Thermoelementkabel gelieferten elektrischen Werten aufweist. Damit ergibt sich der Vorteil einer zusätzlichen Temperatursensierung über Spannungsmessung durch Seebeck-Effekt mittels der Thermoelementkabel.

Gemäß dem unabhängigen Anspruch 18 ist das erste Messgerät als ein Kapazitätsmessgerät ausgebildet und mit einem kapazitiven Messaufnehmer elektrisch leitend verbunden ist, wobei der kapazitive Messaufnehmer eine veränderliche Kapazität aufweist, welche aus einer Elektrodenplatte des mindestens einen Bremsbelags, der Reibmasse des mindestens einen Bremsbelags als Dieelektrikum der Kapazität und einer Bremsscheibe oder einer Bremstrommel einer zuzuordnenden Bremse gebildet ist, wobei das erste Messgerät die Belagdicke der Reibmasse des mindestens einen Bremsbelags durch Messung der Kapazität des Messaufnehmers indirekt erfasst. Der kapazitive Messaufnehmer bildet mit einer Einzelelektrode und die Bremsscheibe und eine Induktivität (im ersten Messgerät) einen LC-Schwingkreis. Bei einem bestimmten Abstand erreicht der Schwingkreis seine Resonanz und kann über eine Verstärkerschaltung abgegriffen werden. Dadurch lassen sich der Belagverschleiß und vor allem die Verschleißgrenze zuverlässig erkennen. Der große Vorteil an diesem Konzept ist die Unabhängigkeit von jeglichem Temperatureinfluss.

Die Elektrodenplatte ist durch eine Isolation gegenüber der Belagrückenplatte des mindestens einen Bremsbelags und durch eine weitere Isolation gegenüber der Reibmasse des mindestens einen Bremsbelags elektrisch isoliert angeordnet. Hierdurch ergibt sich ein vorteilhaft kompakter und platzsparender Aufbau.

Nach den Merkmalen des Anspruchs 20 ergibt sich ein vorteilhaft einfacher und kompakter Aufbau und es kann Schrägverschleiß auf einfache Weise ermittelt werden. Natürlich können auch mehr als drei Kontaktbänder vorgesehen sein.

In einer anderen Ausführung weist mindestens einer der mindestens zwei Bremsbeläge mindestens ein weiteres Kontaktband auf, welches in Längsrichtung der Reibmasse zwischen den mindestens zwei Kontaktbändern angeordnet ist. Der Vorteil hierbei ist, dass Schrägverschleiß auf einfache Weise ermittelt werden kann. Natürlich können auch mehr als drei Kontaktbänder vorgesehen sein.

In einer alternativen Ausführung des Bremsbelagsatzes für eine Bremse, mit mindestens zwei Bremsbelägen mit jeweils einer Belagrückenplatte, auf der eine Reibmasse aufgebracht ist, wobei die Bremse die oben beschriebene Belagverschleißmesseinrichtung aufweist, ist vorgesehen, dass mindestens einer der mindestens zwei Bremsbeläge eine Elektrodenplatte zwischen der Reibmasse und der Belagrückenplatte aufweist, wobei die Elektrodenplatte durch eine Isolation gegenüber der Belagrückenplatte und durch eine weitere Isolation gegenüber der Reibmasse elektrisch isoliert angeordnet ist. Dies ergibt einen vorteilhaft einfachen Bremsbelagsatz zur Anwendung in einem kapazitiven Messaufnehmer.

Die Erfindung ermöglicht die folgenden Vorteile.

Durch eine Messung des Widerstandes der Reibmasse

- ist eine kontinuierliche Verschleißmessung möglich, welche den Verschleiß an jeder Stelle der jeweiligen Reibmasse berücksichtigt,
- ist eine direkte Ermittlung der Reibmassentemperatur möglich, wodurch Heißläufer- oder eine Bremsenüberlastungserkennung möglich sind,
- ist der Kontakt der Reibmasse zur Bremsscheibe (oder Bremstrommel im Fall einer Trommelbremse) direkter erkennbar, was die Regelbarkeit der Bremse verbessert oder eine frühzeitige Heißläufererkennung ermöglicht.

Durch das Einlegen von Kontaktbändern

- wird der Übergangswiderstand zur Reibmasse minimiert,
- wird eine gleichmäßige elektrische Anbindung sichergestellt,
- kann eine einfachere Form- oder Stoffschlüssige Verbindung zu den Kabeln hergestellt werden,
- kann über Kontaktbanderhebungen (Laschen, Vorsprünge) eine Verschleißgrenze definiert und sensiert werden.

Durch die Verwendung von vertieften Kontaktbändern (in Ausnehmungen) wird der Reibmassenpressvorgang nicht behindert.

Durch die Verwendung von 3 oder mehr Kontaktbändern kann Schrägverschleiß ermittelt werden.

Durch den Einsatz von Thermoelementkabeln

- kann die Temperatursensierung redundant geprüft werden,
- kann der Temperatureinfluss auf den Widerstand herausgerechnet werden → Verschleißzustand ist auch bei heißer Reibmasse ermittelbar,
- kann die Temperaturmessung auch während der Bremsung stattfinden

Die Erfindung wird nun anhand beispielhafter Ausführungen mit Bezug auf die beigefügten Zeichnungen näher erläutert. Hierbei zeigen:

Fig. 1      eine schematische Schnittansicht einer erfindungsgemäßen Scheibenbremse mit einer erfindungsgemäßen Belagverschleißmesseinrichtung;

Fig. 2      eine schematische Blockdarstellung der Belagverschleißmesseinrichtung nach Fig. 1;

Fig. 3      eine schematische Perspektivansicht eines erfindungsgemäßen Bremsbelags;

Fig. 4 bis 6      schematische Schnittansichten des Bremsbelags nach Fig. 2 mit einem schematischen Ersatzschaltbild;

Fig. 7 bis 9      schematische Perspektivansichten von Kontaktbändern;

Fig. 10 bis 11      schematische Schnittansichten weiterer Bremsbeläge mit schematischen Ersatzschaltbildern;

Fig. 12 bis 13      eine schematische Schnittansicht einer Variante des erfindungsgemäßen Bremsbelags nach Fig. 2 mit einem schematischen Ersatzschaltbild;

Fig. 14      die schematische Schnittdarstellung des erfindungsgemäßen Bremsbelags nach Fig. 3 mit einer Kontaktsensierung;

Fig. 15      eine schematische Perspektivansicht einer weiteren Variante des erfindungsgemäßen Bremsbelags nach Fig. 2;

Fig. 16 bis 17      schematische Darstellungen von kapazitiven Messaufnehmern;

Fig. 18      eine schematische Blockdarstellung eines weiteren Ausführungsbeispiels der Belagverschleißmesseinrichtung mit einem Messaufnehmer nach Fig. 17; und

Fig. 19      eine schematische Schnittansichten eines Ausführungsbeispiels eines weiteren Messaufnehmers mit einem Bremsbelags nach Fig. 16 mit einem schematischen Ersatzschaltbild.

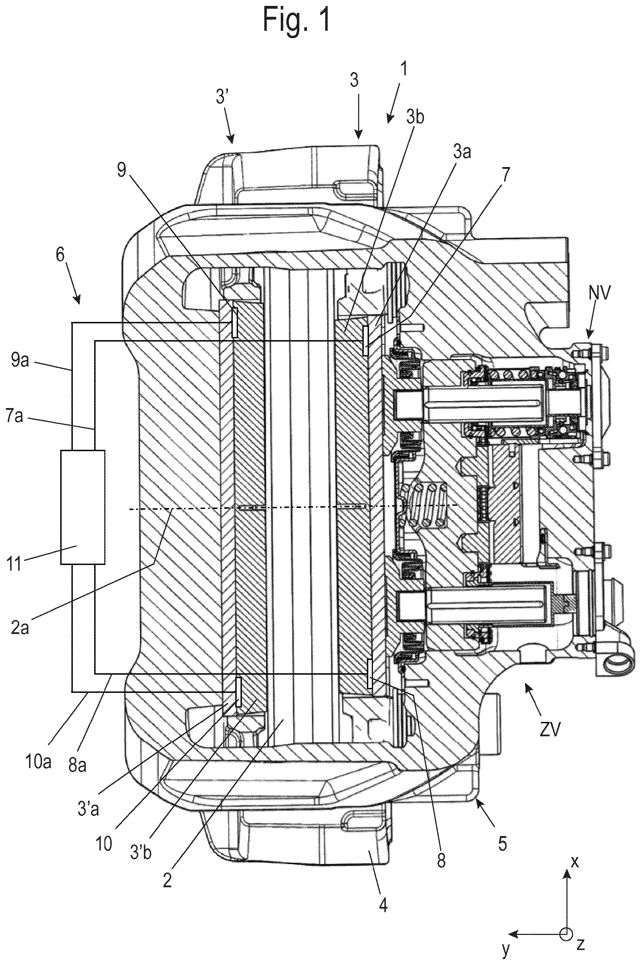

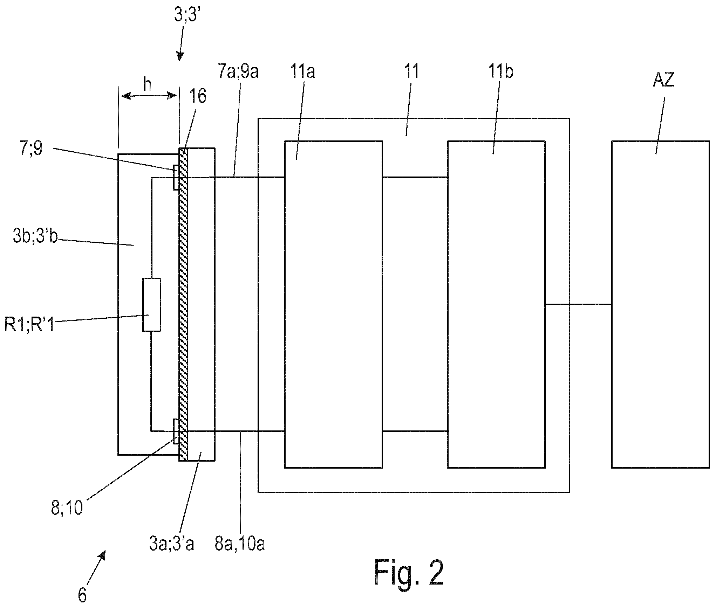

**Fig. 1** zeigt eine schematische Schnittansicht einer erfindungsgemäßen Scheibenbremse 1 mit einer erfindungsgemäßen Belagverschleißmesseinrichtung 6. In **Fig. 2** ist eine schematische Blockdarstellung der Belagverschleißmesseinrichtung 6 nach Fig. 1 dargestellt.

Koordinaten x, y, z dienen zur Orientierung. Hierbei verläuft die x-Richtung in Fahrrichtung eines Fahrzeugs, dem die Scheibenbremse 1 zugeordnet ist. Die y-Koordinate verläuft in einer Richtung parallel zu einer Bremsscheibenachse 2a einer Bremsscheibe 2 der Scheibenbremse 1. Die z-Richtung verläuft in einer vertikalen Richtung senkrecht zu der Bremsscheibenachse 2a.

Die erfindungsgemäße Scheibenbremse 1 umfasst eine Bremsscheibe 2 mit einer Bremsscheibendrehachse 2a, mindestens zwei Bremsbeläge 3, 3', einen ortsfesten Bremsträger 4, eine Nachstellvorrichtung NV, eine Zuspannvorrichtung ZV und eine Belagverschleißmesseinrichtung 6.

Die erfindungsgemäße Scheibenbremse 1 weist im Unterschied zu einer üblichen Scheibenbremse die Belagverschleißmesseinrichtung 6 auf. Dies wird im Folgenden im Zusammenhang mit einer beispielhaften Scheibenbremse erläutert. Ein solches Beispiel einer üblichen Scheibenbremse ist in dem Dokument DE 10 2012 108 672 B3 beschrieben, auf welches hier verwiesen wird.

Daher werden die Gemeinsamkeiten der erfindungsgemäßen Scheibenbremse 1 und der üblichen Scheibenbremse hier zur Übersicht nur kurz beispielhaft angegeben, wobei die Unterschiede ausführlich aufgezeigt werden.

Der Bremssattel 5 der beispielhaften Scheibenbremse 1 ist hier als Schiebesattel ausgebildet und an dem Bremsträger 4 verschiebbar geführt angebracht. Der Bremssattel 5 übergreift die Bremsscheibe 2. Die Bremsbeläge 3, 3' sind gegensinnig in Richtung der Bremsscheibendrehachse 2a bewegbar. Die Zuspannvorrichtung ZV, z.B. mit einem Bremsdrehhebel, ist im Bremssattel 5 angeordnet und beispielsweise druckluftbetätigt. Es kann aber auch ein anderer Antrieb vorgesehen sein, z.B. ein hydraulischer oder/und elektrischer Antrieb.

Die Scheibenbremse 1 ist hier eine zweistempelige Bremse mit zwei Gewindestempeln. Beiderseits der Bremsscheibe 2 ist ein Bremsbelag 3, 3' mit jeweils einer Belagrückenplatte 3a, 3'a, auf dem jeweils eine Reibmasse 3b, 3'b, welche auch als Reibbelag bezeichnet wird, aufgebracht ist, angeordnet. Der Bremsbelag 3, welcher sich zwischen der Zuspannvorrichtung ZV und der Bremsscheibe 2 befindet, wird als zuspannseitiger Bremsbelag 3 bezeichnet, wobei der Bremsbelag 3' auf der anderen Seite der Bremsscheibe 2 rückenseitiger bzw. reaktionsseitiger Bremsbelag 3' genannt wird.

Ein Abstand zwischen den Bremsbelägen 3, 3' und der Bremsscheibe 2 in der gelösten Stellung der Scheibenbremse 1, die in Fig. 1 gezeigt ist, wird als Lüftspiel bezeichnet.

Die Nachstellvorrichtung NV ist zur Verschleißnachstellung eines vorher festgelegten Lüftspiels, das als Nominallüftspiel bezeichnet wird, ausgebildet. Hier ist die Nachstellvorrichtung NV mit einem der beiden Gewindestempel verbunden. Aufbau und Funktion der Nachstellvorrichtung NV kann dem Dokument DE 10 2012 108 672 B3 entnommen werden.

Ein Unterschied der erfindungsgemäßen Scheibenbremse 1 zu der in dem Dokument DE 10 2012 108 672 B3 beschriebenen Scheibenbremse (und anderen) besteht darin, dass die erfindungsgemäße Scheibenbremse 1 keinen Verschleißsensor aufweist, der mit der Nachstellvorrichtung NV, z.B. über Getriebeeinheiten wie beispielsweise eine Synchroneinrichtung, Planetengetriebe usw., zusammenwirkt. Anstelle des Verschleißsensors weist die erfindungsgemäße Scheibenbremse 1 die Belagverschleißmesseinrichtung 6 auf.

Die Belagverschleißmesseinrichtung 6 dient zur Erfassung des Verschleißes der Bremsbeläge 3, 3'. Der Verschleiß eines Bremsbelages 3, 3' tritt an der Reibmasse 3b, 3'b auf und bewirkt eine Verringerung einer Belagdicke h der Reibmasse 3b, 3'b in Richtung der Bremsscheibendrehachse 2a, d.h. in x-Richtung. Somit kann über die Belagdicke h der Verschleiß eines Bremsbelags 3, 3' ermittelt werden.

Die Reibmasse 3b, 3'b weist einen elektrischen Widerstand R1, R'1 auf. Da sich der elektrische Widerstand R1, R'1 der Reibmasse 3b, 3'b mit der Querschnittsfläche der Reibmasse 3b, 3'b ändert, kann durch die Messung dieses elektrischen Widerstands R1, R'1 ein Rückschluss auf die Belagdicke h und somit auf den Verschleiß der Reibmasse 3, 3'b des jeweils zugehörigen Bremsbelags 3, 3' gemacht werden. Mit anderen Worten, die Belagdicke h wird indirekt über den elektrischen Widerstand R1, R'1 der Reibmasse 3b, 3'b gemessen. Der elektrische Widerstand R1, R'1 ist somit die Messgröße, welche von der Belagverschleißmesseinrichtung 6 gemessen wird.

Die unter dem hier verwendeten Begriff "Messeinrichtung" beschriebenen Messgeräte weisen selbstverständlich Hilfsgeräte zur Stromversorgung auf. Daher handelt es sich um eine vollständige Messeinrichtung bzw. Messkette, welche diese nicht gezeigten Geräte einschließt. Somit wird die norm- bzw. richtliniengerechte Definition des Begriffs "Messeinrichtung" erfüllt.

Die Belagverschleißmesseinrichtung 6 umfasst eine Auswerteeinheit 11 und eine Anzeige AZ. Die Auswerteeinheit 11 weist für jeden Bremsbelag 3, 3' jeweils ein erstes Messgerät 11a und ein zweites Messgerät 11b auf. In Fig. 2 ist nur der Aufbau der Auswerteeinheit 11 für einen Bremsbelag 3, 3' dargestellt, wobei der Aufbau für einen zweiten Bremsbelag 3, 3' oder auch mehr identisch zu dem dargestellten ist. Dies ist leicht vorstellbar.

Das erste Messgerät 11a ist ein Messaufnehmer mit einem Widerstandsmessgerät, z.B. mit einer Brückenschaltung, und steht in Zusammenwirkung mit einem Bauteil der Scheibenbremse 1. Dieses Bauteil ist hier der jeweiligen Bremsbelag 3, 3'. Dazu ist das erste Messgerät 11a mit der Reibmasse 3b, 3'b des jeweiligen Bremsbelags 3, 3' elektrisch leitend verbunden.

Ein solche elektrisch leitende Verbindung mit der Reibmasse 3b, 3'b des jeweiligen Bremsbelags 3, 3' ist hier jeweils mit zwei Kontaktbändern 7, 8 und 9, 10 ausgebildet. Die Kontaktbänder 7, 8 und 9, 10 sind in oder/und an der jeweiligen Reibmasse 3b, 3'b angeordnet, wie unten noch ausführlich beschrieben ist. Die Reibmasse 3b, 3'b und die Kontaktbänder 7, 8 und 9,10 sind durch eine Isolation 16 gegenüber der Belagrückenplatte 3a, 3'a des jeweiligen Bremsbelags 3, 3' elektrisch isoliert.

Das zweite Messgerät 11b weist z.B. eine Verstärkerschaltung und eine Vergleicherschaltung auf. Damit ist es möglich, den gemessenen Widerstandswert mit vorher festgelegten Werten zu vergleichen und jeweils einer Belagdicke h zuzuordnen, welche dem Verschleiß der Reibmasse 3b, 3'b des jeweiligen Bremsbelags 3, 3' entspricht. Bei Erreichen eines Verschleißgrenzwertes wird die Anzeige AZ, z.B. eine Warnlampe, angesteuert. Natürlich ist auch eine kontinuierliche Verschleißanzeige möglich.

Die Belagverschleißmesseinrichtung 6 ist auf diese Weise zur Messung des elektrischen Widerstands R1, R'1 der Reibmasse 3b, 3'b eines jeweiligen Bremsbelags 3, 3' ausgebildet.

Da sich der Widerstand R1, R'1 der Reibmasse 3b, 3'b mit der Temperatur ändert, kann hierdurch auch ein Rückschluss auf die Temperatur in der Reibmasse 3b, 3'b gemacht werden. Hierzu kann die Belagverschleißmesseinrichtung 6 eine weitere Schaltung zur Auswertung der gemessenen Widerstandswerte zur Erfassung einer Temperatur der Reibmasse 3b, 3'b aufweisen.

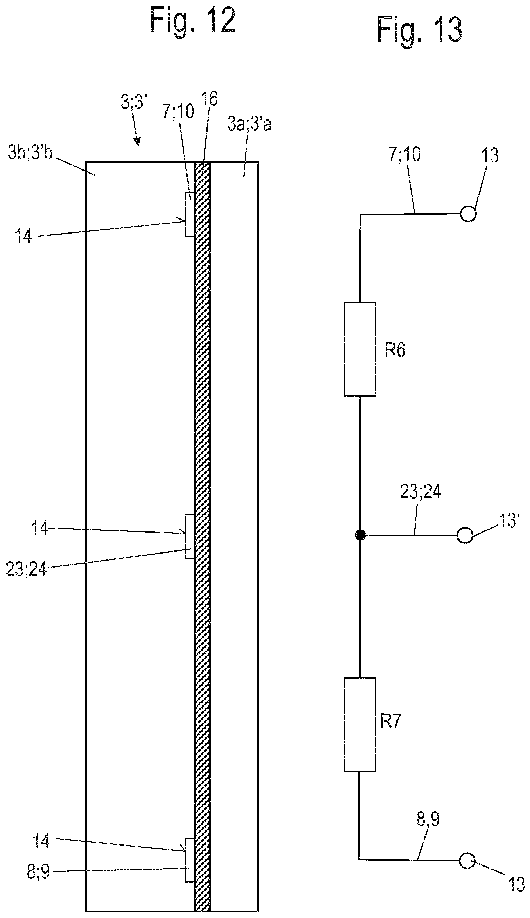

Wenn die jeweilige Reibmasse 3b, 3'b die Bremsscheibe 2 bei einem eingeleiteten Bremsvorgang berührt, ändert sich der elektrische Widerstand R1, R'1 der jeweiligen Reibmasse 3b, 3'b schlagartig. Auf diese Weise kann hiermit eine so genannte Kontaktsensierung ermöglicht werden. Dies wird unten im Zusammenhang mit Fig. 13 noch näher erläutert.

Durch eine Messung des Widerstandes R1, R'1 der Reibmasse 3b, 3'b

- ist eine kontinuierliche Verschleißmessung möglich, welche den Verschleiß an jeder Stelle der jeweiligen Reibmasse 3b, 3'b berücksichtigt,
- ist eine direkte Ermittlung der Reibmassentemperatur möglich, wodurch Heißläufer- oder eine Bremsenüberlastungserkennung möglich sind,
- ist der Kontakt der Reibmasse 3b, 3'b zur Bremsscheibe 2 (oder Bremstrommel im Fall einer Trommelbremse) direkter erkennbar, was die Regelbarkeit der Bremse verbessert oder eine frühzeitige Heißläufererkennung ermöglicht.

Die Kontaktbänder 7, 8, 9, 10 sind hier in Streifenform ausgebildet. Jedes Kontaktband 7, 8, 9, 10 ist zwischen der Belagrückenplatte 3a, 3'a und der zugehörigen Reibmasse 3b, 3'b eines jeweiligen Bremsbelags 3, 3' angeordnet. Die Kontaktbänder 7, 8, 9, 10 sind dabei in geeigneter Weise gegenüber der Belagrückenplatte 3a, 3'a elektrisch isoliert. Dies wird unten noch näher beschrieben.

Jeweils zwei Kontaktbänder 7, 8 und 9, 10 kontaktieren die jeweilige Reibmasse 3b, 3'b und bilden jeweils zwei elektrisch leitende Anschlüsse der jeweiligen Reibmasse 3b, 3'b derart, dass ein elektrischer Widerstand R1, R'1 der jeweiligen Reibmasse 3b, 3'b zwischen den zwei Kontaktbändern 7, 8 und 9, 10 gemessen werden kann.

So weist der zuspannseitige Bremsbelag 3 zwei Kontaktbänder 7 und 8 in jeweils einem Seitenbereich auf. In gleicher Weise sind zwei Kontaktbänder 9 und 10 in jeweils einem Seitenbereich des rückenseitigen Bremsbelags 3' angeordnet. Jedes Kontaktband 7, 8, 9, 10 ist über eine jeweilige elektrisch leitende Anschlussleitung 7a, 8a, 9a, 10a an der Auswerteeinheit 11 angeschlossen.

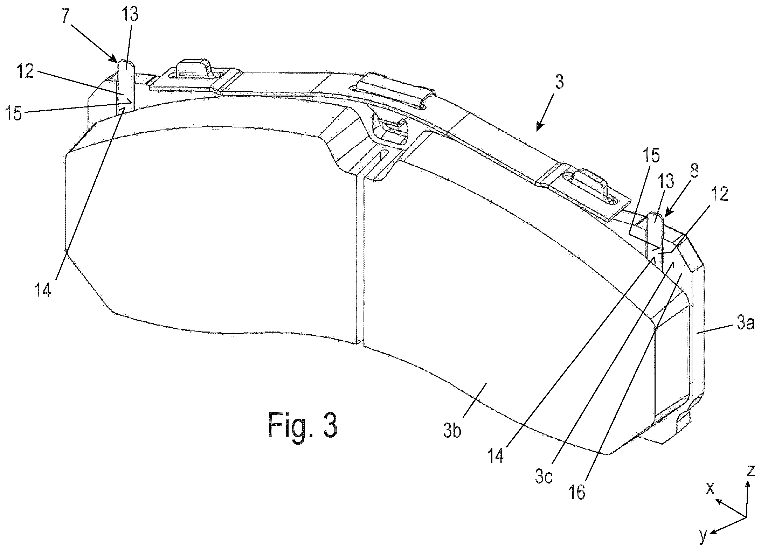

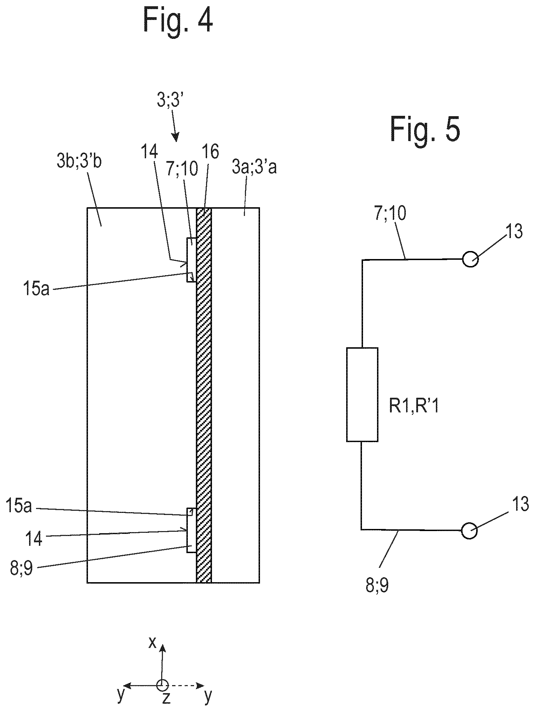

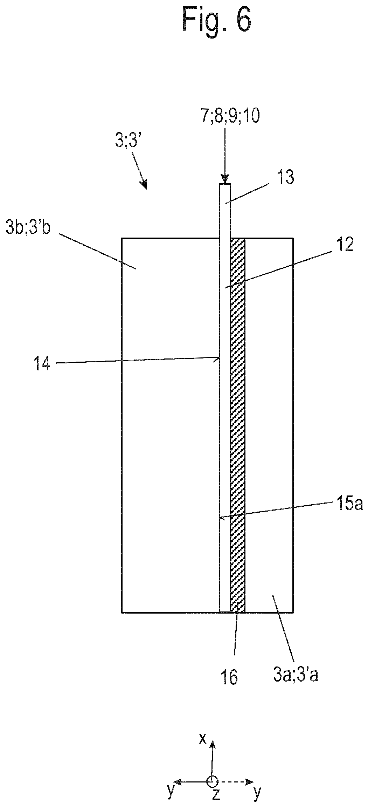

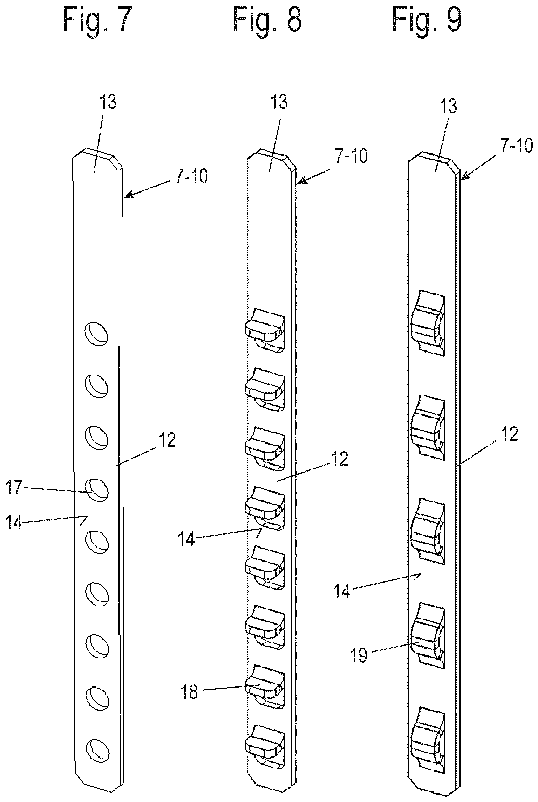

Hierzu zeigt **Fig. 3** beispielhaft eine schematische Perspektivansicht eines erfindungsgemäßen Bremsbelags 3. Es handelt sich hierbei um den zuspannseitigen Bremsbelag 3, die Erläuterung gelten aber auch in gleicher Weise für den rückenseitigen Bremsbelag 3' und dessen Belagrückenplatte 3'a und Reibmasse 3'b. **Fig. 4** und **Fig. 6** stellen schematische Schnittansichten des Bremsbelags 3 nach Fig. 2 dar und sind nicht maßstabsgetreu. Fig. 3 zeigt einen Schnitt in einer x-y-Ebene des Bremsbelag 3, wobei der Schnitt in Fig. 5 in einer y-z-Ebene verläuft. In **Fig. 5** ist ein schematisches Ersatzschaltbild des Bremsbelags 3 nach Fig. 2 mit dem Messaufnehmer gezeigt. **Fig. 7, Fig. 8, Fig. 9** zeigen schematische Perspektivansichten von Kontaktbändern 7, 8, 9, 10.

Der Bremsbelag 3 umfasst die Belagrückenplatte 3a, die Reibmasse 3b, eine nicht bezeichnete Belaghaltefeder und mindestens zwei Kontaktbänder 7 und 8 (9 und 10). Auch zusätzliche Kontaktbänder sind vorstellbar, um mehr Informationen über den Status der Reibmasse 3a zu ermitteln. Dies wird unten noch weiter erläutert. Das Kontaktband 7, 8 (9, 10) kann unterschiedliche Querschnittsformen und Längen aufweisen, wie unten noch ausführlich im Zusammenhang mit Fig. 7, 8, 9 beschrieben wird.

Jedes Kontaktband 7, 8, 9, 10 weist einen Körper 12, einen Anschlussabschnitt 13 und eine elektrisch leitende Kontaktfläche 14 auf. Der Körper 12 ist hier mit einem rechteckigen Querschnitt ausgebildet. Natürlich sind auch andere Querschnitte möglich, beispielsweise kreisrunde, ovale, zickzackförmige u.dgl. Der Anschlussabschnitt 13 ist an einem oberen Ende des Körpers 12, welches hier oberhalb der Reibmasse 3b angeordnet ist und in z-Richtung nach oben von Reibmasse 3b und Belagrückenplatte 3a hervorsteht, angeordnet und elektrisch leitend mit der Kontaktfläche 14 verbunden.

Die Kontaktflächen 14 stehen jeweils elektrisch leitend mit der ebenfalls elektrisch leitenden Reibmasse 3b, 3'b des Bremsbelags 3 in Kontakt. Dabei bildet die Reibmasse 3b, 3'b einen elektrischen Widerstand R1, R'1 zwischen den jeweiligen zwei Kontaktbändern 7, 8 und 9, 10. Dieses ist in dem Ersatzschaltbild in Fig. 4 gezeigt. Die Anschlussabschnitte 13 der Kontaktbänder 7, 8 und 9, 10 sind dabei die Anschlüsse des jeweiligen Widerstands R1, R'1 der Reibmasse 3b, 3'b. Ein Stromverlauf zur Messung des jeweiligen Widerstands R1, R'1 der Reibmasse 3b, 3'b beginnt beispielsweise an dem Kontaktband 7, 9, verläuft durch den Widerstand R1, R'1 der Reibmasse 3b, 3'b in x-Richtung, also im Wesentlichen parallel zu der Belagrückenplatte 3a, 3'a und in das andere Kontaktband 8, 10.

Damit zwischen der Reibmasse 3b, welche auf der Belagseite 3c der Belagrückenplatte 3a aufgebracht ist, und den Kontaktbändern 7, 8 jeweils keine elektrische Verbindung zur Belagrückenplatte 3a entsteht, ist eine Isolation 16 notwendig. So muss die Belagrückenplatte 3a vor dem Aufpressen bzw. Aufbringen der Reibmasse 3b lackiert oder anderweitig elektrisch isolierend beschichtet werden. Diese Isolierfunktion kann auch ein üblicherweise aufgebrachter Kleber übernehmen. Hierbei wird beispielsweise der Kleber auf die Belagseite 3c der Belagrückenplatte aufgebracht, die Kontaktbänder eingelegt und der Kleber anschließend getrocknet. Nach dem Aufbringen der Reibmasse mit Druck und Hitze muss die Kleberschicht zwischen Belagrückenplatte 3a und den Kontaktbändern 7, 8 noch ausreichend dick sein. Die Isolation 16 ist in den Figuren nur schematisch angedeutet.

Eine weitere Isolierung zwischen der Belagrückenplatte 3a und den Kontaktbändern 7, 8 kann auch über eine einseitige Beschichtung der Kontaktbänder 7, 8 (9, 10), welche zwischen Kontaktbändern 7, 8 (9, 10) und der Rückenplatte 3a liegt, oder über ein zusätzliches isolierendes Bauteil erreicht werden. Das isolierende Bauteil kann z.B. eine Kunststoffplatte sein. Es ist auch möglich, dass das Kontaktband 7, 8, 9, 10 einen Kunststoff- bzw. nichtleitenden Träger in Bandform aufweist, welcher auf der Seite, die mit der Reibmasse 3b in elektrischem Kontakt steht, mit einer elektrisch leitenden Beschichtung versehen ist.

Die Kontaktbänder 7, 8, 9, 10 weisen eine gute elektrische Verbindung zu der jeweiligen Reibmasse 3b, 3'b auf. Dies kann z.B. durch Löcher als Durchgangsöffnungen 17 (siehe Fig. 7) in den Kontaktbändern 7, 8, 9, 10, einer aufgerauten Bandoberfläche der Kontaktfläche 14 (nicht dargestellt, aber leicht vorstellbar) und/oder durch Stanzungen erzeugte hervorstehende Vorsprünge 18, 19 (Fig. 8, Fig. 9) ausgebildet sein. Die Vorsprünge 18 (Fig. 8) sind hier Laschen, wohingegen die Vorsprünge 19 Dome bilden und stehen jeweils von der Kontaktfläche 14 in die Reibmasse 3b, 3'b hervor. Dadurch kann die Kontaktierung zwischen den Kontaktbändern 7, 8, 9, 10 zu der Reibmasse 3b, 3'b verbessert werden.

Die Vorsprünge 18 in Form von Laschen und die Vorsprünge 19 in Gestalt von Domen bieten als hervorstehende Kontaktbandelemente den Vorteil, dass hiermit eine Verschleißgrenze definiert und erkannt werden kann, wenn diese Vorsprünge 18, 19 beim Bremsen die Bremsscheibe 2 berühren und somit ein Kurzschluss von einem Kontaktband 7, 9 zu dem anderen Kontaktband 8, 10 über die elektrisch leitende Bremsscheibe 2 entsteht. Dabei ist dann der an den Anschlussabschnitten 13 der betreffenden Kontaktbänder 7, 8, 9, 10 gemessene Widerstandswert aufgrund der elektrisch gut leitenden Verbindung über die Bremsscheibe 2 sehr klein geworden, d.h. annähernd 0 Ohm, denn der jeweilige Widerstand R1, R'1 als jeweiliger Restwiderstand der jeweiligen Reibmasse 3b, 3'b ist durch die Kurzschlussverbindung der Bremsscheibe 2 überbrückt. Eine solche Parallelschaltung von Kurzschlussverbindung und Widerstand R1, R'1 ergibt somit einen Widerstandswert, welcher geringer als die Kurzschlussverbindung ist. Der Verlauf der Kontaktbänder 7, 8, 9, 10 innerhalb und außerhalb der Reibmasse ist nur beispielhaft und kann sich selbstverständlich von den Darstellungen unterscheiden.

Die Kontaktbandspitze (oberes Ende) eines jeweiligen Kontaktbandes 7, 8, 9, 10, welche den Anschlussabschnitt 13 bildet, kann als Stecker (z.B. für eine Flachsteckverbindung) ausgeformt sein oder in stoffschlüssiger Verbindung mit der jeweiligen Anschlussleitung 7a, 8a, 9a, 10a (siehe Fig. 1) stehen.

Auf diese Weise kann eine einfachere form- oder stoffschlüssige Verbindung der Kontaktbänder 7, 8, 9, 10 zu der jeweiligen Anschlussleitung 7a, 8a, 9a, 10a hergestellt werden.

Optional können anstatt der einfachen Anschlussleitungen 7a, 8a, 9a, 10a Thermoelementkabel verwendet werden. Hierdurch bieten sich weitere Messmöglichkeiten zur Temperaturermittlung. Ggf. ist hierfür ein drittes Kabel erforderlich.

Um bei der Herstellung den Pressvorgang des Aufbringens der Reibmasse 3b, 3'b auf die Belagrückenplatte 3a, 3'a nicht zu behindern ist ein vertieftes Einsetzen der Kontaktbänder 7, 8, 9, 10 in die Belagrückenplatte 3a, 3'a sinnvoll.

In der in Fig. 3 gezeigten Ausführung des Bremsbelags 3 sind die beiden Kontaktbänder 7 und 8 jeweils in einer rechteckförmigen Ausnehmung 15 als Vertiefung in die Belagseite 3c der Belagrückenplatte 3a eingesetzt. Die Ausnehmungen 15 liegen jeweils in einem seitlichen Endbereich der Belagrückenplatte 3a, erstrecken sich in z-Richtung und sind in die Belagseite 3c der Belagrückenplatte 3a eingeformt.

Alternativ können auch Ausnehmungen 15a in die Reibmasse 3b eingeformt sein, wie in den Figuren 4 und 6 schematisch dargestellt ist. Dabei sind die Kontaktbänder 7, 8, 9, 10 in die Seite der Reibmasse 3b, 3'b eingesetzt, welche mit der Belagseite 3c der jeweiligen Belagrückenplatte 3a, 3'a verbunden ist.

In diesem Fall von in die Reibmasse 3b, 3'b eingelegten bzw. eingesetzten Kontaktbändern 7, 8, 9, 10 wird ein Übergangswiderstand von den Kontaktbändern 7, 8, 9, 10 zu der jeweiligen Reibmasse 3b, 3'b minimiert und gleichzeitig eine gleichmäßige elektrische Anbindung sichergestellt.

Auch das Auflegen der Kontaktbänder 7, 8, 9, 10 auf der Belagseite 3c der Belagrückenplatte 3a, 3'a (ohne Vertiefungen bzw. Ausnehmungen 15) ist vorstellbar.

Ähnlich zu der Widerstandsmessung der Reibmasse 3b, 3'b längs des Bremsbelages 3, 3' (in x-Richtung in Fig. 3) von einem Kontaktband 7, 8 zum anderen Kontaktband 9, 10 gibt es eine weitere Variante. Vor allem im Schienenfahrzeugbereich gibt es sogenannte Multi-Bremsbeläge 3, deren Reibmasse 3b aus einzelnen Segmenten 3, 3.1, 3.2, 3.3 besteht.

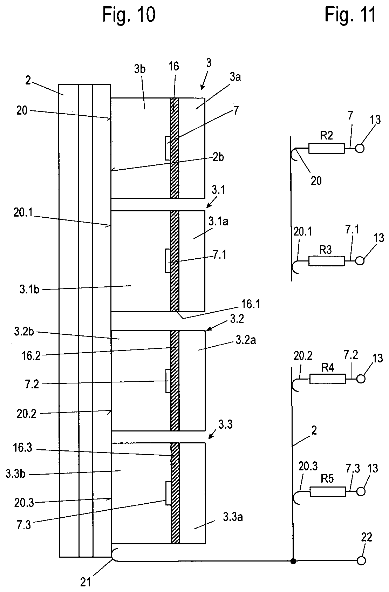

Dazu zeigt **Fig. 10** eine schematische Schnittansicht weiterer Bremsbeläge 3, 3.1, 3.2, 3.3. Die schematischen Ersatzschaltbilder sind in **Fig. 11** dazu dargestellt.

Jeder Bremsbelag 3, 3.1, 3.2, 3.3 weist als Segment eine Belagrückenplatte 3a, 3.1a, 3.2a, 3.3a und eine jeweils dazu gehörende Reibmasse 3b, 3.1b, 3.2b, 3.3b auf. Dies ist in Fig. 10 nur grob schematisch angedeutet.

In jedem Bremsbelag 3, 3.1, 3.2, 3.3 als Segment ist jeweils ein Kontaktband 7, 7.1, 7.2, 7.3 angeordnet, welches mit der jeweiligen Reibmasse 3b, 3.1b, 3.2b, 3.3b elektrisch leitend in Kontakt steht. Zwischen der jeweiligen Belagrückenplatte 3a, 3.1a, 3.2a, 3.3a und dem jeweiligen Kontaktband 7, 7.1, 7.2, 7.3 ist jeweils eine Isolation 16 vorgesehen, um eine elektrische Verbindung zwischen der jeweiligen Belagrückenplatte 3a, 3.1a, 3.2a, 3.3a und dem jeweiligen Kontaktband 7, 7.1, 7.2, 7.3 zu verhindern.

In Fig. 10 sind die Bremsbeläge 3, 3.1, 3.2, 3.3 als Segmente bei zugespannter Bremse gezeigt. Dabei stehen die Reibmassen 3b, 3.1b, 3.2b, 3.3b jeweils mit einer Reibfläche 20, 20.1, 20.2, 20.3 mit einer Scheibenreibfläche 2b der Bremsscheibe 2 (oder der Bremstrommel bei einer Trommelbremse) sowohl in mechanischem als auch in elektrisch leitenden Kontakt.

Der elektrische Stromverlauf bei einer Widerstandsmessung an solch einem Segment-Belag 3, 3.1, 3.2, 3.3 verläuft hier unterschiedlich, wobei zwei Fälle unterschieden werden, die in den Figuren 10 und 11 oben beginnend dargestellt sind.

In dem ersten Fall erstreckt sich der Stromverlauf von dem Kontaktband 7 des (hier obersten) Segmentes 3 entlang der Reibmassendicke der zugehörigen Reibmasse 3b parallel zu der Bremsscheibendrehachse 2a zur Bremsscheibe 2 hin, über die Kontaktstelle der Reibfläche 20 der Reibmasse 3b und der Scheibenreibfläche 2b der Bremsscheibe 2 in die Bremsscheibe 2 hinein, durch einen Abschnitt der Bremsscheibe 2 bis zu der nächsten Kontaktstelle der Scheibenreibfläche 2b der Bremsscheibe 2 und der Reibfläche 20.1 der nächsten bzw. daneben liegenden Reibmasse 3.1b des benachbarten Segmentes 3.1, durch diese Kontaktstelle hindurch in die Reibmasse 3.1b und durch diese entlang der Reibmassendicke des Segmentes 3.1 parallel zu der Bremsscheibendrehachse 2a bis zu dem Kontaktband 7.1 des benachbarten Segmentes 3.1.

Dabei ergibt sich eine Reihenschaltung des Widerstandes R2 der Reibmasse 3b des oberen Segmentes 3, des Abschnitts der Bremsscheibe 2 zwischen den Kontaktstellen der Reibflächen 20 und 20.1 mit der Scheibenreibfläche 2b der Bremsscheibe 2 und des Widerstandes R3 der Reibmasse 3.1b des benachbarten Segmentes 3.1. Die Summe der Widerstände R2 und R3 kann an den Anschlussabschnitten 13 durch die Auswerteeinheit 11 gemessen werden.

In dem zweiten Fall kann jeder Widerstand R4, R5 eines Segmentes 3.2, 3.3 einzeln gemessen werden.

Hierbei erstreckt sich der Stromverlauf von dem Kontaktband 7.2 des (hier von oben dritten angeordneten) Segmentes 3.2 entlang der Reibmassendicke der zugehörigen Reibmasse 3.2b parallel zu der Bremsscheibendrehachse 2a zur Bremsscheibe 2 hin, über die Kontaktstelle der Reibfläche 20.2 der Reibmasse 3.2b und der Scheibenreibfläche 2b der Bremsscheibe 2 in die Bremsscheibe 2 hinein. Die Bremsscheibe 2 steht nun über eine weitere Kontaktstelle mit z.B. einem schleifenden Kontaktabschnitt 21 elektrisch leitend in Verbindung. Der Kontaktabschnitt 21 ist zudem mit einem Anschluss 22 elektrisch leitend verbunden. Der Widerstand R4 kann zwischen dem Anschlussabschnitt 13 des Kontaktbandes7.2 des Segmentes 3.2 und dem Anschluss 22 von der Auswerteeinheit 11 gemessen werden.

Bei dem benachbarten Segment 3.3 (unterstes Segment) erfolgt der Stromverlauf wie bei dem darüber angeordneten Segment 3.2. Die Anschlusspunkte für die Messung des Widerstands R5 werden durch den Anschlussabschnitt 13 des Kontaktbandes7.3 des Segmentes 3.3 und durch den Anschluss 22 der Bremsscheibe 2 gebildet.

Auf diese Weise sind auch die Widerstände der anderen Segmente messbar, wobei die Bremsscheibe 2 einen gemeinsamen Bezugspunkt mit dem Anschluss 22 für alle Widerstände bildet.

**Fig. 12** zeigt eine schematische Schnittansicht einer Variante des erfindungsgemäßen Bremsbelags 3, 3' nach Fig. 2. **Fig. 13** stellt dazu ein schematisches Ersatzschaltbild dar.

In dieser Variante ist ein drittes Kontaktband 23, 24 zwischen den beiden seitlichen Kontaktbändern 7, 10 und 8, 9 in der Reibmasse 3b, 3'b angeordnet, wobei die Kontaktfläche 14 des dritten Kontaktbandes 23, 24 in einem mittleren Bereich der Reibmasse 3b , 3'b mit dieser in elektrisch leitendem Kontakt steht.

Auf diese Weise wird ein Ersatzwiderstand der Reibmasse 3b, 3'b in zwei in Reihe geschaltete Widerstände R6 und R7 aufgeteilt, wobei das mittlere Kontaktband 23, 24 mit der Verbindung dieser beiden Widerstände R6 und R7 wie in Fig. 12 dargestellt verbunden ist. Eine Messung des ersten Widerstands R6 ist über die Kontaktbänder 7, 10 und 23, 24 möglich, wobei der zweite Widerstand R7 über die Kontaktbänder 23, 24 und 8, 9 gemessen werden kann.

Hiermit ist es möglich, einen Schrägverschleiß des Bremsbelags 3, 3' zu erfassen, indem die Werte der Widerstände R6 und R7 verglichen werden. Liegt ein Schrägverschleiß der Reibmasse 3b, 3'b dergestalt vor, dass der in Fig. 12 obere Teil stärker verschlissen ist als der untere Teil der Reibmasse 3b, 3'b, welchem der Widerstand R7 zugeordnet ist, so ist der Wert des Widerstands R6 größer als derjenige des Widerstands R7.

Es ist auch möglich, dass mehr als drei Kontaktbänder 7, 8, 9, 10, 23, 24 vorgesehen sind. Beispielsweise ein zusätzliches Kontaktband jeweils mittig zwischen dem mittleren Kontaktband 23, 24 und dem seitlichen Kontaktband 7, 10; 8, 9. Damit kann ein Schrägverschleiß noch genauer ermittelt werden.

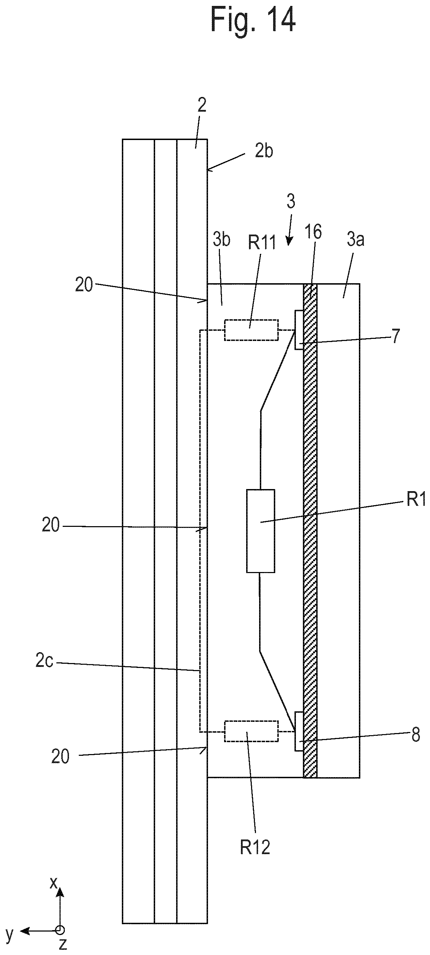

**Fig. 14** zeigt die schematische Schnittdarstellung des erfindungsgemäßen Bremsbelags 3 nach Fig. 4 mit einer Kontaktsensierung. Dies gilt natürlich auch für den rückenseitigen Bremsbelag 3'.

Unter dem Begriff "Kontaktsensierung" ist hier eine Erfassung des Zeitpunktes zu verstehen, in welchem die Reibmasse 3b, 3'b des Bremsbelags 3, 3' mit der Bremsscheibe 2 in Kontakt kommt. Dieser Zeitpunkt wird auch "Reibepunkt" genannt und ist der Punkt, in welchem die Reibmasse 3b, 3'b des Bremsbelags 3, 3' an der Bremsscheibe 2 anliegt. Der Reibepunkt wird beim Zuspannen nach Überbrückung des Lüftspiels erreicht. Weiteres Zuspannen bewirkt dann durch Anpressen der Reibmasse 3b, 3'b des Bremsbelags 3 an die Bremsscheibe 2 eine Bremsung. Ein Lösen der Zuspannvorrichtung ZV bewirkt eine Umkehrung des oben beschriebenen Vorgangs.

In Fig. 14 ist diese Situation schematisch zusammen mit einem Ersatzschaltbild dargestellt. Wenn die Reibmasse 3b die Bremsscheibe 2 bei einem eingeleiteten Bremsvorgang berührt, ändert sich der an den Kontaktbändern 7, 8 gemessene elektrische Widerstandswert schlagartig. Dies beruht darauf, dass die leitende Scheibenreibfläche 2b der Bremsscheibe 2 die gesamte Reibfläche 20 der Reibmasse 3b elektrisch leitend kontaktiert und damit den Widerstand R1 der Reibmasse 3b zwischen den Kontaktbändern 7, 8 überbrückt. Diese Überbrückung weist zwar auch einen elektrischen Widerstand auf, der durch zwei Widerstände R11 und R12 symbolisiert ist, welche durch die Scheibenreibfläche 2b verbunden in Reihe geschaltet werden. Dies ist durch eine gestrichelte Verbindung 2c schematisch dargestellt. Ein solcher Überbrückungswiderstand ist aber von seinem Wert her wesentlich kleiner als der Widerstand R1 der Reibmasse 3b. Diese schlagartige Änderung ist an den Kontaktbändern 7, 8 messbar.

Vor der schlagartigen Änderung erstreckt sich beim Messen des Widerstands R1 der Reibmasse 3b ein erster Stromverlauf zwischen den Kontaktbändern 7 und 8 durch den Widerstand R1.

Im Falle der schlagartigen Änderung ergibt sich zu dem ersten Stromverlauf durch den Widerstand R1 ein zweiter Stromverlauf, beispielsweise ausgehend von dem Kontaktband 7 entlang der Reibmassendicke h der Reibmasse 3b parallel zu der Bremsscheibendrehachse 2a zur Bremsscheibe 2 hin (durch den Widerstand R11), über die Kontaktstelle der Reibfläche 20 der Reibmasse 3b und der Scheibenreibfläche 2b der Bremsscheibe 2 in die Bremsscheibe 2 hinein, durch die Verbindung 2c der Bremsscheibe 2 bis zu der nächsten Kontaktstelle der Scheibenreibfläche 2b der Bremsscheibe 2 und der Reibfläche 20 der Reibmasse 3b, durch diese Kontaktstelle hindurch in die Reibmasse 3b und durch diese entlang der Reibmassendicke der Reibmasse 3b (durch den Widerstand R12) parallel zu der Bremsscheibendrehachse 2a bis zu dem anderen Kontaktband 8. Es sind längs der Verbindung 2c überall Kontaktstellen mit der Reibfläche 20 der Reibmasse 3b vorhanden, woraus sich eine Parallelschaltung von sehr vielen Widerständen R11, R12 entlang der Reibmassendicke ergibt. Hier sind diese Widerständen R11, R12 jedoch in dem Ersatzschaltbild auf zwei reduziert.

Somit ergibt sich bei der schlagartigen Änderung des Widerstandswertes, der an den Kontaktbändern 7 und 8 gemessen werden kann, eine Parallelschaltung des Widerstands R1 und der Widerstände R11, R12 und der Verbindung 2c. Die Widerstände R11, R12 in y-Richtung entlang der Reibmassendicke weisen wesentlich kleinere Werte auf als der Widerstand R1 in x-Richtung der Reibmasse 3b, da die Reibmassendicke erheblich kleiner ist als die Längserstreckung der Reibmasse 3b.

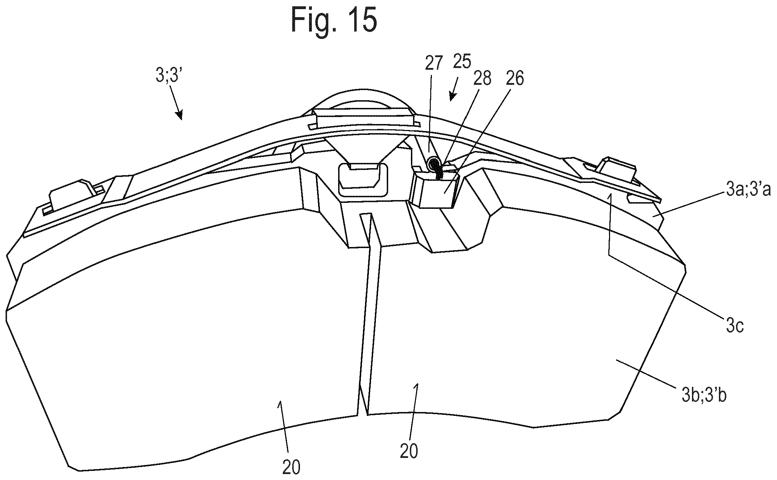

**Fig. 15** zeigt eine schematische Perspektivansicht einer weiteren Variante des erfindungsgemäßen Bremsbelags 3 nach Fig. 3, was auch für den rückenseitigen Bremsbelag 3' gilt.

Diese Variante kann in zwei Ausführungen aufgebaut sein. In der ersten Ausführung, die Fig. 14 gezeigt ist, ist ein Sensor 25 als ein Verschleiß- und Temperatursensor vorgesehen.

Der Sensor 25 umfasst mindestens einen Sensordraht 26, der mit einer Anschlussleitung 27 elektrisch leitend verbunden ist, und ein Gehäuse 28.

Der Sensor 25 ist als ein so genannter Verschleißclip an dem Bremsbelag 3 mit dem Gehäuse 28 angebracht. Im Unterschied zu einem herkömmliche Verschleißclip ist der Sensor 25 mit Thermoelementdrähten als Sensordraht 26 anstatt mit herkömmlichen Drähten bestückt. Der Sensordraht 26 bildet beispielsweise eine Leiterschleife, die bei Erreichen des Verschleißwertes durchtrennt wird.

Dadurch erweitert sich die Funktion eines solchen Verschleißclips über eine einfache Verschleißerfassung hinaus (Reibmasse 3b verschlissen / Reibmasse 3b nicht verschlissen) um die Funktion einer kontinuierlichen Temperaturerfassung an der Reibmasse 3b oder nahe an der Reibmasse 3b. Somit kann bei ausreichender Belagdicke h der Reibmasse 3b (die Belagdicke h der Reibmasse 3b verläuft in Richtung parallel zu der Bremsscheibendrehachse 2a) die Temperatur an oder/und nahe der Reibfläche 20 gemessen werden. Wird die minimale Belagdicke h der Reibmasse 3b unterschritten, werden die Thermoelementdrähte, d.h. die Sensordrähte 26, durchtrennt und hierdurch die Notwendigkeit eines Belagwechsels erkannt.

Durch die Temperaturmessung direkt am Bremsbelag 3, 3' kann robust und schnell ein mögliches Heißlaufen der Bremse erkannt und Gegenmaßnahmen können eingeleitet werden.

Die Temperatursensierung erfolgt mittels des Sensordrahtes 26 über Spannungsmessung durch Seebeck-Effekt (Thermoelementkabel).

Das Gehäuse 28 kann auch eine Steckverbindung aufweisen. Diese Steckverbindung kann z.B. an der Belagrückenplatte 3a des Bremsbelags 3 auf der Belagseite 3c, beispielsweise in einem mittleren Bereich, angebracht sein.

Die zweite Ausführung der weiteren Variante ist nicht dargestellt, aber im Zusammenhang mit Fig. 3 leicht vorstellbar, und weist mindestens zwei Kontaktbänder 7, 8, 9, 10 gemäß Fig. 3 auf. Hierbei kann mit Hilfe von Thermoelementkabeln, welche mit mindestens einem Kontaktband 7, 8, 9 ,10 verbunden sind, die Temperatur dort ermittelt werden.

Zur Unterscheidung der Widerstandseffekte des elektrischen Widerstands der Reibmasse 3b, 3'b des Bremsbelags 3, 3' sind verschiedene Messzeitpunkte zu wählen, da sich die Widerstandseffekte überlagern.

Daher müssen verschiedenen Zeitpunkte zur Ermittlung von Temperatur, Verschleiß und Scheibenkontakt des jeweiligen Bremsbelags 3, 3' gewählt werden.

Diese Zeitpunkte sind Fahrtbeginn, Zuspannen der Bremse, Bremsvorgang, Lösen der Bremse und sind wie im Folgenden angegeben verteilt den jeweiligen Messungen zugeordnet.

Bei Standardverkabelung

- Verschleißsensierung zu Fahrtbeginn bei kalten Bremsbelägen 3, 3'
- Kontaktsensierung von Bremsbelag 3, 3' und Bremsscheibe 2 beim Betätigen der Bremse
- Temperatursensierung kurz nach einem Bremsvorgang

Bei Verkabelung mit Thermoelementdraht

- Verschleißsensierung identisch zur Standardverkabelung
- Kontaktsensierung identisch zur Standardverkabelung
- Temperatursensierung am Ende der Sensordrähte 26 (Thermoelementdrähte) während und/oder nach einem Bremsvorgang

Die Steuerung der verschiedenen Messzeitpunkte kann mittels einer geeigneten Steuereinrichtung erfolgen, welche mit der Auswerteeinheit 11 verbunden oder in dieser angeordnet ist, und deren Messwerte zu den verschiedenen Messzeitpunkten übernimmt. Die so erfassten Messwerte werden dann mit vorher festgelegten Grenzwerten verglichen. Bei Erreichen von jeweiligen Grenzwerten für Verschleiß, Temperatur, Kontaktsensierung werden entsprechende Anzeigen angesteuert und die Werte dann z.B. in einer Speichereinrichtung gespeichert, die bei Überwachung, Wartung, Auswertung ausgelesen werden können.

Alternativ zur elektrischen Widerstandsmessung der Reibmasse 3b, 3'b des Bremsbelags 3, 3' ist eine Messung der Kapazität zwischen der Belagrückenplatte 3a, 3'a, welche durch die Isolation 16 gegenüber der Reibmasse 3b, 3b' elektrisch isoliert ist (siehe Fig. 4, 6, 10, 12, 14), und der Bremsscheibe 2 möglich.

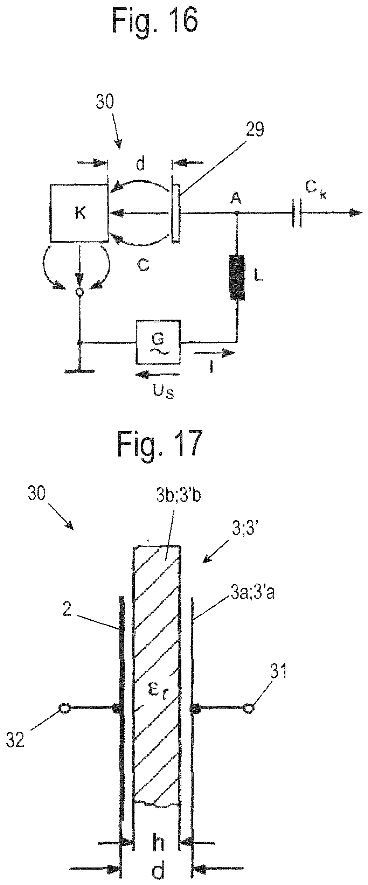

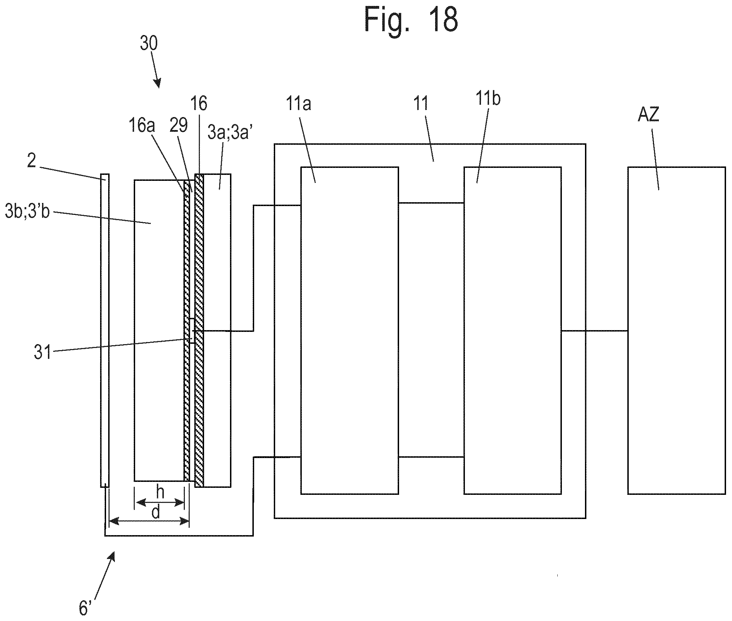

Hierzu zeigt **Fig. 16** eine schematische Darstellungen einer kapazitiven Belagverschleißmesseinrichtung 6'. In **Fig. 17** ist ein kapazitiver Messaufnehmer 30 dargestellt. **Fig. 18** zeigt eine schematische Blockdarstellung eines weiteren Ausführungsbeispiels der Belagverschleißmesseinrichtung 6 mit einem Messaufnehmer 30 nach Fig. 17.

Es werden zwei unterschiedliche Ansätze angegeben (vgl. J. Niebuhr, Physikalische Messtechnik mit Sensoren, Oldenburg Industrieverlag, ISBN 979-3-8356-3151-9, Seite 193ff), von denen ein erster Ansatz in **Fig. 16** mit der kapazitiven Belagverschleißmesseinrichtung 6' gezeigt ist.

Die kapazitive Belagverschleißmesseinrichtung 6' umfasst einen kapazitiven Messaufnehmer 30 mit einer Elektrodenplatte 29 und einem Körper K und einen Oszillator G mit einem LC-Schwingkreis.

Die Elektrodenplatte 29 und der Körper K bilden eine Kapazität C, welche von einem Dieelektrikum zwischen dem Körper K und der Elektrodenplatte 29, der Flächen des Körpers K und der Elektrodenplatte 29 sowie einem Abstand d zwischen der Elektrodenplatte 29 und dem Körper K abhängig ist. Das Dieelektrikum ist in diesem Fall die Umgebungsluft.

Der Oszillator G ist nur als Block gezeigt und mit einer Induktivität L und der Kapazität C mit dem Körper K verbunden. Die Induktivität L und die Kapazität C bilden einen Schwingkreis LC des Oszillators G. Der Schwingkreis LC bestimmt die Frequenz des Oszillators G. Die Kapazität C ist hier durch Variation des Abstands d veränderlich. Dadurch ist auch die Frequenz des Oszillators G in bestimmten Grenzen variabel.

Das Signal des Oszillators G wird mit einer bestimmten Amplitude und einer bestimmten Frequenz über einen Kondensator Ck, der an einer Verbindung A von Elektrodenplatte 29 und Induktivität L angeschlossen ist, zur Weiterverarbeitung, z.B. durch einen Verstärker, Ratiodetektor u.dgl., ausgekoppelt.

Bei einem bestimmten Abstand d erreicht der Schwingkreis LC seine Resonanzfrequenz, wobei das Signal des Oszillators G seine maximale Amplitude und die Resonanzfrequenz aufweist.

Der Abstand d des Körpers K steuert den Wert der Kapazität C im Schwingkreis LC (Abstandsgrenzwert). In dem gezeigten Beispiel entspricht der Abstand d der Belagdicke h des Reibbelags 3b, 3'b des Bremsbelags 3, 3' gemessen bei einem Bremsvorgang gegenüber der Bremsscheibe 2.

Mittels des ausgekoppelten Signals des Oszillators G am Kondensator Ck lassen sich der Verschleißzustand des Reibbelags 3b, 3'b des Bremsbelags 3, 3' und vor allem die Verschleißgrenze zuverlässig erkennen. Der große Vorteil an diesem Konzept ist die Unabhängigkeit von jeglichem Temperatureinfluss.

**Fig. 17** zeigt eine schematische Darstellung eines kapazitiven Messaufnehmers 30 als zweiten Ansatz.

Der Messaufnehmer 30 ist hier einen Plattenkondensator, welcher die Belagrückenplatte 3a, 3'a des Bremsbelags 3, 3' als eine erste Elektrodenplatte 29, die Bremsscheibe 2 als eine zweite Elektrodenplatte und die Reibmasse 3b, 3'b des Bremsbelags 3, 3' als Dielektrikum $\varepsilon_r$ aufweist.

Mit diesem Aufbau bildet der Messaufnehmer 30 einen kapazitiven Sensor zur Ermittlung einer Belagdicke h der Reibmasse 3b, 3'b in Abhängigkeit von einem Abstand d zwischen Bremsscheibe 2 und Belagrückenplatte 3a, 3'a und von der Reibmasse 3b, 3'b als Dielektrikum $\varepsilon_r$.

Für eine relative Kapazitätsänderung kann über die Formel (1) auf die Änderung der Belagdicke h der Reibmasse 3b, 3'b des Bremsbelags 3, 3' rückgeschlossen werden.

$$\frac{\Delta C}{C} = \frac{(\varepsilon_r - 1) * \Delta h}{\varepsilon_r * (d - h) + h} \qquad (1)$$

C ist die Kapazität des aus dem Messaufnehmer 30 gebildeten Plattenkondensators.

Hierbei stellt sich allerdings das Problem, dass sich im besagten Konzept sowohl die Belagdicke h des Dielektrikums (d.h. der Reibmasse 3b, 3'b), als auch der Abstand d ändern. Hierfür muss über eine Korrelation die Belagdicke h der Reibmasse 3b, 3'b bestimmt werden. Da bei abnehmendem Abstand d die Kapazität C steigt, jedoch bei

abnehmender Belagdicke h ($\varepsilon_r$ >1) der Reibmasse 3b, 3'b die Kapazität C sinkt, muss über eine Funktion das Lüftspiel, bzw. die Belagdicke h der Reibmasse 3b, 3'b errechnet werden.

Zur Realisierung eines solchen Messaufnehmers 30 ist es erforderlich, dass entweder die Belagrückenplatte 3a, 3'a oder die Bremsscheibe 2 oder beide isoliert von der Betriebsmasse angeordnet sind.

Das in der **Fig. 18** gezeigte zweite Ausführungsbeispiel der Belagverschleißmesseinrichtung 6' umfasst wie das erste Ausführungsbeispiel eine Auswerteeinheit 11 mit einem ersten Messgerät 11a, einem zweiten Messgerät 11b und eine Anzeige AZ.

Jedoch ist hier das erste Messgerät 11a ein Kapazitätsmessgerät, z.B. mit dem Oszillator G, und steht in Zusammenwirkung mit dem Messaufnehmer 30, der den jeweiligen Bremsbelag 3, 3' und die Bremsscheibe 2 der Scheibenbremse 1 aufweist. Dazu ist das erste Messgerät 11a mit einer Elektrodenplatte 29 des jeweiligen Bremsbelags 3, 3' über den Anschluss 31 und zusätzlich mit der Bremsscheibe 2 über den Anschluss 32 elektrisch leitend verbunden.

Die Elektrodenplatte 29 ist durch eine Isolation 16 gegenüber der Belagrückenplatte 3a, 3'a des jeweiligen Bremsbelags 3, 3' und durch eine weitere Isolation 16a gegenüber der Reibmasse 3b, 3'b des jeweiligen Bremsbelags 3, 3' elektrisch isoliert.

Die Elektrodenplatte 29 und die Bremsscheibe 2 bilden die Kapazität C wie oben schon beschrieben. Die Reibmasse 3b, 3'b bildet das Dieelektrikum, welches sich mit der Querschnittsfläche der Reibmasse 3b, 3'b bei Verschleiß ändert. Daher kann durch die Messung der Kapazität C ein Rückschluss auf die Belagdicke h und somit auf den Verschleiß der Reibmasse 3, 3'b des jeweils zugehörigen Bremsbelags 3, 3' gemacht werden. Mit anderen Worten, die Belagdicke h wird indirekt über die Kapazität C von Elektrodenplatte 29 und Bremsscheibe 2 in Abhängigkeit von der Belagdicke h der Reibmasse 3b, 3'b als Dieelektrikum gemessen. Die Kapazität C ist somit die Messgröße, welche von der Belagverschleißmesseinrichtung 6' gemessen wird.

Das zweite Messgerät 11b weist z.B. wie bei dem ersten Ausführungsbeispiel eine Verstärkerschaltung und eine Vergleicherschaltung auf. Damit ist es möglich, den gemessenen Kapazitätswert mit vorher festgelegten Werten zu vergleichen und jeweils einer Belagdicke h zuzuordnen, welche dem Verschleiß der Reibmasse 3b, 3'b des jeweiligen Bremsbelags 3, 3' entspricht. Bei Erreichen eines Verschleißgrenzwertes wird die Anzeige AZ, z.B. eine Warnlampe, angesteuert. Natürlich ist auch eine kontinuierliche Verschleißanzeige möglich.

Die Belagverschleißmesseinrichtung 6' ist auf diese Weise zur Messung der Kapazität C, gebildet aus Elektrodenplatte 29, Bremsscheibe 2 und Reibmasse 3b, 3'b in Abhängigkeit von der Belagdicke h Reibmasse 3b, 3'b als Dieelektrikums ausgebildet.

In einer Weiterbildung kann eine "Verdopplung" des oben beschriebenen Aufbaus zur Kapazitätsmessung erfolgen. Dabei kann die Kapazität zwischen den beiden isolierten Reibmassen 3b, 3'b der Bremsbeläge 3, 3' gemessen werden. Somit ist bei einer Bremsung, bei welcher die Reibmassen 3b, 3'b an der Bremsscheibe 2 anliegen (d=h), die Belagdicke direkt über die Kapazität messbar. Dies ist nicht dargestellt, aber im Zusammenhang mit Fig. 18 leicht vorstellbar.

In diesem Fall dient die Bremsscheibe 2 als gemeinsame Masseelektrode für beide Reibmassen 3b, 3'b, welche ein jeweiliges Dieelektrikum einer jeweiligen Kapazität bilden. Die so gebildeten Kapazitäten sind parallelgeschaltet, wobei sich ihre von dem Dieelektrikum abhängigen Kapazitätswerte zu einer Gesamtkapazität addieren.

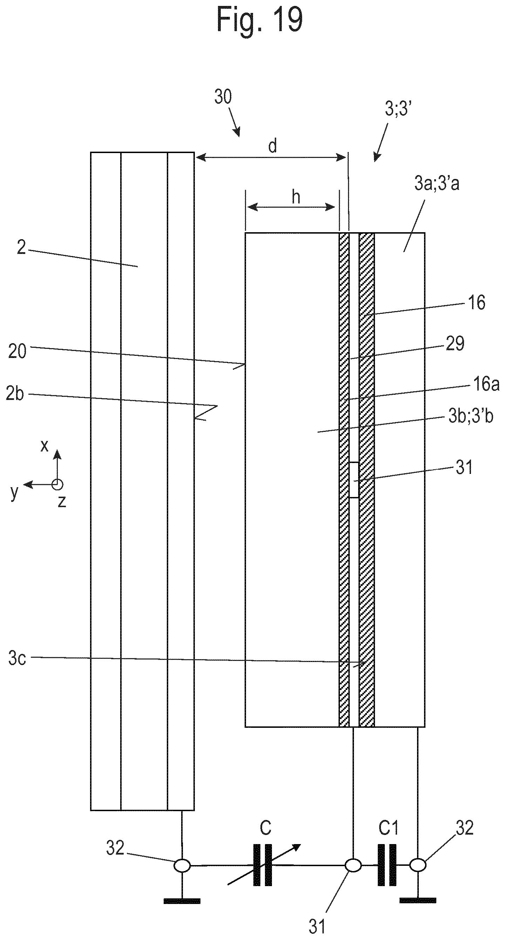

Hierzu zeigt **Fig. 19** eine schematische Schnittansichten eines weiteren Ausführungsbeispiels eines Messaufnehmers 30 mit einem Bremsbelags 3, 3' nach Fig. 17 mit einem schematischen Ersatzschaltbild

In diesem Ausführungsbeispiel ist die Elektrodenplatte 29 (siehe Fig. 16) zwischen der Belagseite 3c der Belagrückenplatte 3a, 3'a und der Reibmasse 3b, 3'b als eine elektrisch leitende Beschichtung mit dem Anschluss 31 vorgesehen. Diese Elektrodenplatte 29 ist sowohl über eine Isolation 16 gegenüber der Belagseite 3c der Belagrückenplatte 3a, 3'a elektrisch isoliert als auch über eine weitere Isolation 16a gegenüber der Reibmasse 3b, 3'b elektrisch isoliert angebracht. Die elektrisch leitende Beschichtung ist über einen Anschluss 31 mit dem Oszillator G (siehe Fig. 16) verbunden. Der Anschluss 31 kann beispielsweise ein Kontaktband oder ähnliches sein und von dem Bremsbelag 3, 3' hervorstehen, wie z.B. in Fig. 2 gezeigt ist. Die Bremsscheibe 2 ist als zweite Elektrode über einen weiteren Anschluss 32 mit der Betriebsmasse elektrisch leitend verbunden.

Der Abstand d verläuft hier zwischen der Scheibenreibfläche 2b und der Elektrodenplatte 29 und ist mitbestimmend (wie oben beschrieben) für die veränderliche Kapazität C. Gleichzeitig bestimmt die Belagdicke h des Reibbelags 3b, 3'b in Abhängigkeit vom Verschleiß auch die veränderliche Kapazität C. Zwischen der Elektrodenplatte 29 und der Belagrückenplatte 3a, 3'a ist eine Kapazität C1 gebildet, welche jedoch im Wesentlichen konstant ist und entsprechend berücksichtigt werden muss. Die Kapazitäten C und C1 sind als Ersatzschaltbild vereinfacht in Fig. 18 eingezeichnet.

Zudem bildet die Isolation 16a zwischen der Elektrodenplatte 19 und dem Reibbelag 3b, 3'b einen zusätzlichen konstanten Teil des Dieelektrikums mit dem Reibbelag 3b, 3'b, wobei der veränderliche Teil des Dieelektrikums durch den Reibbelag 3b, 3'b gebildet wird.

Geeignete Oszillatorschaltungen für einen solchen kapazitiven Messaufnehmer 30 können der einschlägigen Literatur entnommen werden, wie beispielsweise in Tietze/Schenk, Halbleiter-Schaltungstechnik, Springer-Verlag Berlin Heidelberg New York, 5. Aufl. 1980, S. 419ff beschrieben sind.

Die Belagverschleißmesseinrichtung 6, 6' kann auch bei anderen, unterschiedlichen Scheibenbremsen als der oben beispielhaft beschriebenen zur Anwendung kommen.

Auch bei Trommelbremsen kann die Belagverschleißmesseinrichtung 6, 6' eingesetzt werden. Dabei bildet die Trommel mit ihrer Innenreibfläche die Verbindung 2c für die Kontaktsensierung nach Fig. 4.

Mit der Belagverschleißmesseinrichtung 6, 6' ist der Zustand der Reibmasse 3b, 3'b des Bremsbelags 3, 3' bezüglich des Verschleißes und der Temperatur kontinuierlich sensierbar. Es ergeben sich folgende Vorteile:

Kontinuierliche Verschleißmessung

- Planung von Servicezeiten
- Schrägverschleißerkennung (bei drei Kontaktbändern 7, 8, 9, 10, 23, 24 oder Reibsegmenten 30, 30.1, 30.2, 30.3)
- Einzelbelagverschleißerkennung → schwergängiger Schiebesattel 5 identifizierbar
- Präzise Steuerbarkeit einer Parkbremse

Temperatur

- Beschleunigter Verscheiß durch zu hohe Belagtemperatur erkennbar
- Thermische Überlastung der Bremse erkennbar
- Heißläufererkennung
- Präzise Steuerbarkeit einer Parkbremse

Hinsichtlich der Steuerbarkeit der Parkbremse ist Folgendes anzumerken.

Ist nach dem Fahren und beim Einlegen der Parkbremse die Belagtemperatur und der Verschleiß bekannt, lässt sich eine Bremsreduzierung beim Abkühlen der Bremse berechnen.

Die Erfindung ist im Rahmen der angefügten Ansprüche modifizierbar.

So ist es z.B. denkbar, dass die Kontaktbänder 7, 7.1, 7.2, 7.3, 8, 9, 10, 14 in Drahtform ausgebildet sind.

BEZUGSZEICHENLISTE

| | |
|---|---|
| 1 | Scheibenbremse |
| 2 | Bremsscheibe |
| 2a | Bremsscheibenachse |
| 2b | Scheibenreibfläche |
| 2c | Verbindung |
| 3, 3'; 3.1, 3.2, 3.3 | Bremsbelag |
| 3a, 3'a; 3.1a, 3.2a, 3.3a | Belagrückenplatte |
| 3b, 3'b; 3.1b, 3.2b, 3.3b | Reibmasse |
| 3c | Belagseite |
| 4 | Bremsträger |
| 5 | Bremssattel |
| 6,6' | Belagverschleißmesseinrichtung |
| 7, 7.1, 7.2, 7.3 | Kontaktband |
| 7a | Anschlussleitung |
| 8, 9, 10 | Kontaktband |
| 8a, 9a, 10a | Anschlussleitung |
| 11 | Auswerteeinheit |
| 11a, 11b | Messgerät |
| 12 | Körper |
| 13 | Anschlussabschnitt |
| 14 | Kontaktfläche |
| 15, 15a | Ausnehmung |
| 16, 16a | Isolation |
| 17 | Durchgangsöffnung |
| 18, 19 | Vorsprung |

| 20, 20.1, 20.2, 20.3 | Reibfläche |
| 21 | Kontaktabschnitt |
| 22 | Anschluss |
| 23, 24 | Kontaktband |
| 25 | Sensor |
| 26 | Sensordraht |
| 27 | Anschlussleitung |
| 28 | Gehäuse |
| 29 | Elektrodenplatte |
| 30 | Messaufnehmer |
| 31, 32 | Anschluss |
| AZ | Anzeige |
| C, C1 | Kapazität |
| d | Abstand |
| G | Generator/Oszillator |
| K | Körper |
| h | Belagdicke |
| NV | Nachstellvorrichtung |
| R1, R'1; R2...R7; R11, R12 | Widerstand |
| x, y, z | Koordinaten |
| ZV | Zuspannvorrichtung |

**Patentansprüche**

1.  Belagverschleißmesseinrichtung (6) für eine Bremse, umfassend mindestens einen Bremsbelag (3, 3') mit einer Belagrückenplatte (3a, 3'a), auf der eine Reibmasse (3b, 3'b) aufgebracht ist, und eine Auswerteeinheit (11), wobei die Auswerteeinheit (11) der Belagverschleißmesseinrichtung (6, 6') ein erstes Messgerät (11a) aufweist, wobei das erste Messgerät (11a) mit der Reibmasse (3b, 3'b) des mindestens einen Bremsbelags (3, 3') in Zusammenwirkung steht und eine Belagdicke (h) der Reibmasse (3b, 3'b) des mindestens einen Bremsbelags (3, 3') indirekt erfasst, wobei das erste Messgerät (11a) mit der Reibmasse (3b, 3'b) des mindestens einen Bremsbelags (3, 3') elektrisch leitend verbunden ist, als ein Widerstandsmessgerät ausgebildet ist und die Belagdicke (h) der Reibmasse (3b, 3'b) des mindestens einen Bremsbelags (3, 3') durch Messung eines elektrischen Widerstands (R1, R'1) der Reibmasse (3b, 3'b) indirekt erfasst, wobei das erste Messgerät (11a) mit der Reibmasse (3b, 3'b) des mindestens einen Bremsbelags (3, 3') über mindestens zwei elektrische leitende Kontaktbänder (7, 8 und 9, 10) elektrisch leitend verbunden ist, **dadurch gekennzeichnet, dass** die mindestens zwei elektrisch leitenden Kontaktbänder (7, 8 und 9, 10) in oder/und an der Reibmasse (3b, 3'b) des mindestens einen Bremsbelags (3, 3') angeordnet sind und mit der Reibmasse (3b, 3'b) des mindestens einen Bremsbelags (3, 3') elektrisch leitend in Kontakt stehen, wobei jedes Kontaktband (7, 8, 9, 10) einen Körper (12), einen Anschlussabschnitt (13) und eine elektrisch leitende Kontaktfläche (14), welche mit der Reibmasse (3b, 3'b) in elektrisch leitendem Kontakt steht, aufweist, wobei der Anschlussabschnitt (13) eines jeden Kontaktbandes (7, 8, 9, 10) an einem oberen Ende des Körpers (12), welches von der Reibmasse (3b, 3'b) hervorsteht, angeordnet und elektrisch leitend mit der Kontaktfläche (14) verbunden ist, wobei der Anschlussabschnitt (13) eines jeden Kontaktbandes (7, 8, 9, 10) als Stecker (z.B. für eine Flachsteckverbindung) ausgeformt ist oder in stoffschlüssiger Verbindung mit einer jeweiligen Anschlussleitung (7a, 8a, 9a, 10a), die mit dem ersten Messgerät (11a) elektrisch leitend verbunden ist, steht, und dass die Kontaktflächen (14) der Kontaktbänder (7, 8, 9, 10) jeweils Löcher als Durchgangsöffnungen (17) in den Kontaktbändern (7, 8, 9, 10), eine aufgeraute Bandoberfläche und/oder hervorstehende Vorsprünge (18, 19) aufweisen, welche mit der Reibmasse (3b, 3'b) in elektrisch leitendem Kontakt stehen.

2.  Belagverschleißmesseinrichtung (6) für eine Bremse, umfassend mindestens einen Bremsbelag (3, 3') mit einer Belagrückenplatte (3a, 3'a), auf der eine Reibmasse (3b, 3'b) aufgebracht ist, und eine Auswerteeinheit (11), wobei die Auswerteeinheit (11) der Belagverschleißmesseinrichtung (6, 6') ein erstes Messgerät (11a) aufweist, wobei das erste Messgerät (11a) mit der Reibmasse (3b, 3'b) des mindestens einen Bremsbelags (3, 3') in Zusammenwirkung steht und eine Belagdicke (h) der Reibmasse (3b, 3'b) des mindestens einen Bremsbelags (3, 3') indirekt erfasst, wobei das erste Messgerät (11a) mit der Reibmasse (3b, 3'b) des mindestens einen Bremsbelags (3, 3') elektrisch leitend verbunden ist, als ein Widerstandsmessgerät ausgebildet ist und die Belagdicke (h) der Reibmasse (3b, 3'b) des mindestens einen Bremsbelags (3, 3') durch Messung eines elektrischen Widerstands (R1, R'1) der Reibmasse (3b, 3'b) indirekt erfasst, **dadurch gekennzeichnet, dass** das erste Messgerät (11a) mit der Reibmasse (3b, 3'b) des mindestens einen Bremsbelags (3, 3') über mindestens zwei elektrische leitende Kontaktbänder (7, 8 und 9, 10) elektrisch leitend verbunden ist, und dass mindestens ein weiteres Kontaktband (24) in Längsrichtung der Reibmasse (3b, 3'b) zwischen den mindestens zwei Kontaktbändern (7, 8 und 9, 10) angeordnet ist.

3. Belagverschleißmesseinrichtung (6) für eine Bremse, umfassend mindestens einen Bremsbelag (3, 3') mit einer Belagrückenplatte (3a, 3'a), auf der eine Reibmasse (3b, 3'b) aufgebracht ist, und eine Auswerteeinheit (11), wobei die Auswerteeinheit (11) der Belagverschleißmesseinrichtung (6, 6') ein erstes Messgerät (11a) aufweist, wobei das erste Messgerät (11a) mit der Reibmasse (3b, 3'b) des mindestens einen Bremsbelags (3, 3') in Zusammenwirkung steht und eine Belagdicke (h) der Reibmasse (3b, 3'b) des mindestens einen Bremsbelags (3, 3') indirekt erfasst, wobei das erste Messgerät (11a) mit der Reibmasse (3b, 3'b) des mindestens einen Bremsbelags (3, 3') elektrisch leitend verbunden ist, als ein Widerstandsmessgerät ausgebildet ist und die Belagdicke (h) der Reibmasse (3b, 3'b) des mindestens einen Bremsbelags (3, 3') durch Messung eines elektrischen Widerstands (R1, R'1) der Reibmasse (3b, 3'b) indirekt erfasst, **dadurch gekennzeichnet, dass** das erste Messgerät (11a) mit der Reibmasse (3b, 3'b) des mindestens einen Bremsbelags (3, 3') über mindestens zwei elektrische leitende Kontaktbänder (7, 8 und 9, 10) elektrisch leitend verbunden ist, und dass mindestens eins der Kontaktbänder (7, 8, 9, 10, 14) mit einem Thermoelementkabel mit dem ersten Messgerät (11a) verbunden ist, wobei die Belagverschleißmesseinrichtung (6) eine Auswerteschaltung zur Ermittlung einer Temperatur der Reibmasse (3b, 3'b) aus den von dem Thermoelementkabel gelieferten elektrischen Werten aufweist.

4. Belagverschleißmesseinrichtung (6) nach einem der Ansprüche 2 bis 3, **dadurch gekennzeichnet, dass** die mindestens zwei elektrisch leitenden Kontaktbänder (7, 8 und 9, 10) in oder/und an der Reibmasse (3b, 3'b) des mindestens einen Bremsbelags (3, 3') angeordnet sind und mit der Reibmasse (3b, 3'b) des mindestens einen Bremsbelags (3, 3') elektrisch leitend in Kontakt stehen.

5. Belagverschleißmesseinrichtung (6) nach Anspruch 1 oder 4, **dadurch gekennzeichnet, dass** die Reibmasse (3b, 3'b) des mindestens einen Bremsbelags (3, 3') und die Kontaktbänder (7, 8 und 9,10) durch eine Isolation (16) gegenüber der Belagrückenplatte (3a, 3'a) des mindestens einen Bremsbelags (3, 3') elektrisch isoliert angeordnet sind.

6. Belagverschleißmesseinrichtung (6) nach Anspruch 1, 4 oder 5, **dadurch gekennzeichnet, dass** von den mindestens zwei Kontaktbändern (7, 8 und 9, 10) jeweils eins in einem Seitenbereich der Reibmasse (3b, 3'b) des mindestens einen Bremsbelags (3, 3') derart angeordnet ist, dass sich zwischen ihnen die Reibmasse (3b, 3'b) in einer Längsrichtung des mindestens eine Bremsbelags (3, 3') erstreckt.

7. Belagverschleißmesseinrichtung (6) nach einem der Ansprüche 2 bis 6, **dadurch gekennzeichnet, dass** jedes Kontaktband (7, 8, 9, 10) einen Körper (12), einen Anschlussabschnitt (13) und eine elektrisch leitende Kontaktfläche (14), welche mit der Reibmasse (3b, 3'b) in elektrisch leitendem Kontakt steht, aufweist.

8. Belagverschleißmesseinrichtung (6) nach Anspruch 7, **dadurch gekennzeichnet, dass** der Anschlussabschnitt (13) eines jeden Kontaktbandes (7, 8, 9, 10) an einem oberen Ende des Körpers (12), welches von der Reibmasse (3b, 3'b) hervorsteht, angeordnet und elektrisch leitend mit der Kontaktfläche (14) verbunden ist.

9. Belagverschleißmesseinrichtung (6) nach Anspruch 8, **dadurch gekennzeichnet, dass** der Anschlussabschnitt (13) eines jeden Kontaktbandes (7, 8, 9, 10) als Stecker (z.B. für eine Flachsteckverbindung) ausgeformt ist oder in stoffschlüssiger Verbindung mit einer jeweiligen Anschlussleitung (7a, 8a, 9a, 10a), die mit dem ersten Messgerät (11a) elektrisch leitend verbunden ist, steht.

10. Belagverschleißmesseinrichtung (6) nach einem der Ansprüche 7 bis 9, **dadurch gekennzeichnet, dass** die Kontaktflächen (14) der Kontaktbänder (7, 8, 9, 10) jeweils Löcher als Durchgangsöffnungen (17) in den Kontaktbändern (7, 8, 9, 10), eine aufgeraute Bandoberfläche und/oder hervorstehende Vorsprünge (18, 19) aufweisen, welche mit der Reibmasse (3b, 3'b) in elektrisch leitendem Kontakt stehen.

11. Belagverschleißmesseinrichtung (6) nach Anspruch 1 oder einem der Ansprüche 7 bis 10, **dadurch gekennzeichnet, dass** die Kontaktbänder (7, 8, 9, 10) jeweils in einer Ausnehmung (15) als Vertiefung in eine Belagseite (3c) der Belagrückenplatte (3a, 3'a) oder/und jeweils in einer Ausnehmungen (15a) in der Reibmasse (3b, 3'b) eingesetzt sind.

12. Belagverschleißmesseinrichtung (6) nach Anspruch 1 oder einem der Ansprüche 3 bis 11, **dadurch gekennzeichnet, dass** mindestens ein weiteres Kontaktband (24) in Längsrichtung der Reibmasse (3b, 3'b) zwischen den mindestens zwei Kontaktbändern (7, 8 und 9, 10) angeordnet ist.

13. Belagverschleißmesseinrichtung (6) nach einem der Ansprüche 1 bis 12, **dadurch gekennzeichnet, dass** die Belagverschleißmesseinrichtung (6) ein zweites Messgerät (11b) umfasst, wobei das zweite Messgerät (11b) eine Verstärkerschaltung und/oder eine Vergleicherschaltung aufweist.

14. Belagverschleißmesseinrichtung (6) nach einem der vorhergehenden Ansprüche, **dadurch gekennzeichnet, dass** die Belagverschleißmesseinrichtung (6) eine Anzeige (AZ) umfasst.

15. Belagverschleißmesseinrichtung (6) nach einem der Ansprüche 1 bis 14, **dadurch gekennzeichnet, dass** die Belagverschleißmesseinrichtung (6) eine Auswerteschaltung zur Ermittlung einer Temperatur der Reibmasse (3b, 3'b) aus den gemessenen Widerstandswerten der Reibmasse (3b, 3'b) aufweist.

16. Belagverschleißmesseinrichtung (6) nach einem der Ansprüche 1 bis 2 oder einem der Ansprüche 4 bis 15, **dadurch gekennzeichnet, dass** mindestens eins der Kontaktbänder (7, 8, 9, 10, 14) mit einem Thermoelementkabel mit dem ersten Messgerät (11a) verbunden ist, wobei die Belagverschleißmesseinrichtung (6) eine Auswerteschaltung zur Ermittlung einer Temperatur der Reibmasse (3b, 3'b) aus den von dem Thermoelementkabel gelieferten elektrischen Werten aufweist.

17. Belagverschleißmesseinrichtung (6) nach einem der vorhergehenden Ansprüche, **dadurch gekennzeichnet, dass** eine schlagartige Änderung des gemessenen Widerstandswertes der Reibmasse (3b, 3'b) an den Kontaktbändern (7, 8, 9, 10, 14) messbar ist, wenn die Reibmasse (3b, 3'b) des mindestens einen Bremsbelags (3, 3') mit einer Bremsscheibe (2) oder einer Bremstrommel einer zuzuordnenden Bremse in Kontakt kommt.

18. Belagverschleißmesseinrichtung (6') für eine Bremse, umfassend mindestens einen Bremsbelag (3, 3') mit einer Belagrückenplatte (3a, 3'a), auf der eine Reibmasse (3b, 3'b) aufgebracht ist, und eine Auswerteeinheit (11), wobei die Auswerteeinheit (11) der Belagverschleißmesseinrichtung (6, 6') ein erstes Messgerät (11a) aufweist, wobei das erste Messgerät (11a) mit der Reibmasse (3b, 3'b) des mindestens einen Bremsbelags (3, 3') in Zusammenwirkung steht und eine Belagdicke (h) der Reibmasse (3b, 3'b) des mindestens einen Bremsbelags (3, 3') indirekt erfasst, wobei das erste Messgerät (11a) als ein Kapazitätsmessgerät ausgebildet ist und mit einem kapazitiven Messaufnehmer (30) elektrisch leitend verbunden ist, wobei der kapazitive Messaufnehmer (30) eine veränderliche Kapazität C aufweist, welche aus einer Elektrodenplatte (29) des mindestens einen Bremsbelags (3, 3'), der Reibmasse (3b, 3'b) des mindestens einen Bremsbelags (3, 3') als Dieelektrikum der Kapazität C und einer Bremsscheibe (2) oder einer Bremstrommel einer zuzuordnenden Bremse gebildet ist, wobei das erste Messgerät (11a) die Belagdicke (h) der Reibmasse (3b, 3'b) des mindestens einen Bremsbelags (3, 3') durch Messung der Kapazität C des Messaufnehmers (30) indirekt erfasst, **dadurch gekennzeichnet, dass** die Elektrodenplatte (29) durch eine Isolation (16) gegenüber der Belagrückenplatte (3a, 3'a) des mindestens einen Bremsbelags (3, 3') und durch eine weitere Isolation (16a) gegenüber der Reibmasse (3b, 3'b) des mindestens einen Bremsbelags (3, 3') elektrisch isoliert angeordnet ist.

19. Bremse, mit mindestens einem Bremsbelag (3, 3') mit einer Belagrückenplatte (3a, 3'a), auf der eine Reibmasse (3b, 3'b) aufgebracht ist, einer Zuspannvorrichtung (ZV) und einer Belagverschleißmesseinrichtung (6, 6'), **dadurch gekennzeichnet, dass** die Belagverschleißmesseinrichtung (6, 6') nach einem der Ansprüche 1 bis 18 ausgebildet ist.

20. Bremsbelagsatz für eine Bremse, mit mindestens zwei Bremsbelägen (3, 3') mit jeweils einer Belagrückenplatte (3a, 3'a), auf der eine Reibmasse (3b, 3'b) aufgebracht ist, wobei die Bremse eine Belagverschleißmesseinrichtung (6) nach Anspruch 7 aufweist, wobei mindestens einer der mindestens zwei Bremsbeläge (3, 3') mindestens zwei in oder/und an der Reibmasse (3b, 3'b) angeordnete elektrisch leitende Kontaktbänder (7, 8 und 9, 10) aufweist, welche mit der Reibmasse (3b, 3'b) elektrisch leitend in Kontakt stehen, wobei die Reibmasse (3b, 3'b) und die Kontaktbänder (7, 8 und 9, 10) durch eine Isolation (16) gegenüber der Belagrückenplatte (3a, 3'a) elektrisch isoliert angeordnet sind, und wobei von den mindestens zwei Kontaktbändern (7, 8 und 9, 10) jeweils eins in einem Seitenbereich der Reibmasse (3b, 3'b) des mindestens einen Bremsbelags (3, 3') derart angeordnet sind, dass sich zwischen ihnen die Reibmasse (3b, 3'b) in einer Längsrichtung des mindestens einen Bremsbelags (3, 3') erstreckt, **dadurch gekennzeichnet, dass** mindestens einer der mindestens zwei Bremsbeläge (3, 3') mindestens ein weiteres Kontaktband (24) aufweist, welches in Längsrichtung der Reibmasse (3b, 3'b) zwischen den mindestens zwei Kontaktbändern (7, 8 und 9, 10) angeordnet ist.

21. Bremsbelagsatz für eine Bremse, mit mindestens zwei Bremsbelägen (3, 3') mit jeweils einer Belagrückenplatte (3a, 3'a), auf der eine Reibmasse (3b, 3'b) aufgebracht ist, wobei die Bremse eine Belagverschleißmesseinrichtung (6, 6') nach Anspruch 18 aufweist, **dadurch gekennzeichnet, dass** das mindestens einer der mindestens zwei Bremsbeläge (3, 3') eine Elektrodenplatte (29) zwischen der Reibmasse (3b, 3'b) und der Belagrückenplatte (3a, 3'a) aufweist, wobei die Elektrodenplatte (29) durch eine Isolation (16) gegenüber der Belagrückenplatte (3a, 3'a) und durch eine weitere Isolation (16a) gegenüber der Reibmasse (3b, 3'b) elektrisch isoliert angeordnet ist.

**Claims**

1. A brake-pad wear-measurement system (6) for a brake, comprising at least one brake pad (3, 3') having a pad back plate (3a, 3'a), to which a friction mass (3b, 3'b) is fitted, and an evaluation unit (11), wherein the evaluation unit (11) of the brake-pad wear-measurement system (6, 6') has a first measuring device (11a), wherein the first measuring device (11a) cooperates with the friction mass (3b, 3'b) of the at least one brake pad (3, 3') and indirectly ascertains a brake-pad thickness (h) of the friction mass (3b, 3'b) of the at least one brake pad (3, 3'), wherein the first measuring device (11a) is electro-conductively connected to the friction mass (3b, 3'b) of the at least one brake pad (3, 3'), is designed as a resistance meter and indirectly ascertains the brake-pad thickness (h) of the friction mass (3b, 3'b) of the at least one brake pad (3, 3') by measuring an electrical resistance (R1, R'1) of the friction mass (3b, 3'b), wherein the first measuring device (11a) is electro-conductively connected to the friction mass (3b, 3'b) of the at least one brake pad (3, 3') via at least two electroconductive contact strips (7, 8 and 9, 10), **characterized in that** the at least two electroconductive contact strips (7, 8 and 9, 10) are arranged in and/or on the friction mass (3b, 3'b) of the at least one brake pad (3, 3') and are in electroconductive contact with the friction mass (3b, 3'b) of the at least one brake pad (3, 3'), wherein each contact strip (7, 8, 9, 10) has a body (12), a connecting portion (13) and an electroconductive contact face (14) that is in electroconductive contact with the friction mass (3b, 3'b), wherein the connecting portion (13) of each contact strip (7, 8, 9, 10) is arranged at an upper end of the body (12) projecting from the friction mass (3b, 3'b) and connected electro-conductively to the contact face (14), wherein the connecting portion (13) of each contact strip (7, 8, 9, 10) is shaped like a plug (e.g. for a flat plug-in connection) or is cohesively connected to a connecting line (7a, 8a, 9a, 10a) that is itself electro-conductively connected to the first measuring device (11a), and that the contact faces (14) of the contact strips (7, 8, 9, 10) each have holes in the form of through-openings (17) in the contact strips (7, 8, 9, 10), a roughened strip surface and/or protruding projections (18, 19) that are in electro-conductive contact with the friction mass (3b, 3'b).

2. A brake-pad wear-measurement system (6) for a brake, comprising at least one brake pad (3, 3') having a pad back plate (3a, 3'a), to which a friction mass (3b, 3'b) is fitted, and an evaluation unit (11), wherein the evaluation unit (11) of the brake-pad wear-measurement system (6, 6') has a first measuring device (11a), wherein the first measuring device (11a) cooperates with the friction mass (3b, 3'b) of the at least one brake pad (3, 3') and indirectly ascertains a brake-pad thickness (h) of the friction mass (3b, 3'b) of the at least one brake pad (3, 3'), wherein the first measuring device (11a) is electro-conductively connected to the friction mass (3b, 3'b) of the at least one brake pad (3, 3'), is designed as a resistance meter and indirectly ascertains the brake-pad thickness (h) of the friction mass (3b, 3'b) of the at least one brake pad (3, 3') by measuring an electrical resistance (R1, R'1) of the friction mass (3b, 3'b), **characterized in that** the first measuring device (11a) is electro-conductively connected to the friction mass (3b, 3'b) of the at least one brake pad (3, 3') via at least two electroconductive contact strips (7, 8 and 9, 10), and that at least one further contact strip (24) is arranged between the at least two contact strips (7, 8 and 9, 10) in the longitudinal direction of the friction mass (3b, 3'b).

3. A brake-pad wear-measurement system (6) for a brake, comprising at least one brake pad (3, 3') having a pad back plate (3a, 3'a), to which a friction mass (3b, 3'b) is fitted, and an evaluation unit (11), wherein the evaluation unit (11) of the brake-pad wear-measurement system (6, 6') has a first measuring device (11a), wherein the first measuring device (11a) cooperates with the friction mass (3b, 3'b) of the at least one brake pad (3, 3') and indirectly ascertains a brake-pad thickness (h) of the friction mass (3b, 3'b) of the at least one brake pad (3, 3'), wherein the first measuring device (11a) is electro-conductively connected to the friction mass (3b, 3'b) of the at least one brake pad (3, 3'), is designed as a resistance meter and indirectly ascertains the brake-pad thickness (h) of the friction mass (3b, 3'b) of the at least one brake pad (3, 3') by measuring an electrical resistance (R1, R'1) of the friction mass (3b, 3'b), **characterized in that** the first measuring device (11a) is electro-conductively connected to the friction mass (3b, 3'b) of the at least one brake pad (3, 3') via at least two electroconductive contact strips (7, 8 and 9, 10), and that at least one of the contact strips (7, 8, 9, 10, 14) is connected by a thermocouple cable to the first measuring device (11a), wherein the brake-pad wear-measurement system (6) has an evaluator circuit for determining a temperature of the friction mass (3b, 3'b) from the electrical values supplied by the thermocouple cable.

4. The brake-pad wear-measurement system (6) according to any one of claims 2 to 3, **characterized in that** the at least two electroconductive contact strips (7, 8 and 9, 10) are arranged in and/or on the friction mass (3b, 3'b) of the at least one brake pad (3, 3') and are in electroconductive contact with the friction mass (3b, 3'b) of the at least one brake pad (3, 3').

5. The brake-pad wear-measurement system (6) according to claim 1 or 4, **characterized in that** the friction mass (3b, 3'b) of the at least one brake pad (3, 3') and the contact strips (7, 8 and 9, 10) are arranged such that they are electrically insulated from the pad back plate (3a, 3'a) of the at least one brake pad (3, 3') by an insulator (16).

6. The brake-pad wear-measurement system (6) according to claim 1, 4 or 5, **characterized in that** one of the at least two contact strips (7, 8 and 9, 10) is arranged in a lateral region of the friction mass (3b, 3'b) of the at least one brake pad (3, 3') such that the friction mass (3b, 3'b) extends between them in a longitudinal direction of the at least one brake pad (3, 3').

7. The brake-pad wear-measurement system (6) according to any one of claims 2 to 6, **characterized in that** each contact strip (7, 8, 9, 10) has a body (12), a connecting portion (13) and an electroconductive contact face (14) that is in electroconductive contact with the friction mass (3b, 3'b).

8. The brake-pad wear-measurement system (6) according to claim 7, **characterized in that** the connecting portion (13) of each contact strip (7, 8, 9, 10) is arranged at an upper end of the body (12) projecting from the friction mass (3b, 3'b) and connected electro-conductively to the contact face (14).

9. The brake-pad wear-measurement system (6) according to claim 8, **characterized in that** the connecting portion (13) of each contact strip (7, 8, 9, 10) is shaped like a plug (e.g. for a flat plug-in connection) or is cohesively connected to a connecting line (7a, 8a, 9a, 10a) that is itself electro-conductively connected to the first measuring device (11a),

10. The brake-pad wear-measurement system (6) according to any one of claims 7 to 9, **characterized in that** that the contact faces (14) of the contact strips (7, 8, 9, 10) each have holes in the form of through-openings (17) in the contact strips (7, 8, 9, 10), a roughened strip surface and/or protruding projections (18, 19) that are in electro-conductive contact with the friction mass (3b, 3'b).

11. The brake-pad wear-measurement system (6) according to claim 1 or any one of claims 7 to 10, **characterized in that** the contact strips (7, 8, 9, 10) are each inserted into a recess (15) in the form of an indent in a pad side (3c) of the pad back plate (3a, 3'a) and/or in a recess (15a) in the friction mass (3b, 3'b).

12. The brake-pad wear-measurement system (6) according to claim 1 or any one of claims 3 to 11, **characterized in that** at least one further contact strip (24) is arranged between the at least two contact strips (7, 8, 9, 10) in the longitudinal direction of the friction mass (3b, 3'b).

13. The brake-pad wear-measurement system (6) according to any one of claims 1 to 12, **characterized in that** the brake-pad wear-measurement system (6) comprises a second measuring device (11b), wherein the second measuring device (11b) has an amplifier circuit and/or a comparator circuit.

14. The brake-pad wear-measurement system (6) according to any one of the preceding claims, **characterized in that** the brake-pad wear-measurement system (6) comprises a display (AZ).

15. The brake-pad wear-measurement system (6) according to any one of claims 1 to 14, **characterized in that** the brake-pad wear-measurement system (6) has an evaluator circuit for determining a temperature of the friction mass (3b, 3'b) from the measured resistance values of the friction mass (3b, 3'b).

16. The brake-pad wear-measurement system (6) according to any one of claims 1 to 2 or any one of claims 4 to 15, **characterized in that** at least one of the contact strips (7, 8, 9, 10, 14) is connected by a thermocouple cable to the first measuring device (11a), wherein the brake-pad wear-measurement system (6) has an evaluator circuit for determining a temperature of the friction mass (3b, 3'b) from the electrical values supplied by the thermocouple cable.

17. The brake-pad wear-measurement system (6) according to any one of the preceding claims, **characterized in that** an abrupt change in the measured resistance value of the friction mass (3b, 3'b) can be measured at the contact strips (7, 8, 9, 10, 14) when the friction mass (3b, 3'b) of the at least one brake pad (3, 3') comes into contact with a brake disk (2) or a brake drum of an associated brake.

**18.** A brake-pad wear-measurement system (6) for a brake, comprising at least one brake pad (3, 3') having a pad back plate (3a, 3'a) to which a friction mass (3b, 3'b) is fitted, and an evaluation unit (11), wherein the evaluation unit (11) of the brake-pad wear-measurement system (6, 6') has a first measuring device (11a), wherein the first measuring device (11a) cooperates with the friction mass (3b, 3'b) of the at least one brake pad (3, 3') and indirectly ascertains a brake-pad thickness (h) of the friction mass (3b, 3'b) of the at least one brake pad (3, 3'), wherein the first measuring device (11a) is designed as a capacitance meter and is electro-conductively connected to a capacitive sensor (30), wherein the capacitive sensor (30) has a modifiable capacitance C, that is formed of an electrode plate (29) of the at least one brake pad (3, 3'), the friction mass (3b, 3'b) of the at least one brake pad (3, 3') as the dielectric of capacitance C and a brake disc (2) or a brake drum of an associated brake, wherein the first measuring device (11a) indirectly ascertaining the brake-pad thickness (h) of the friction mass (3b, 3'b) of the at least one brake pad (3, 3') by measuring the capacitance C of the sensor (30), **characterised in that** the electrode plate (29) is arranged such that it is electrically insulated from the pad back plate (3a, 3'a) of the at least one brake pad (3, 3') by an insulator (16) and electrically insulated from the friction mass (3b, 3'b) of the at least one brake pad (3, 3') by a further insulator (16a).

**19.** A brake having at least one brake pad (3, 3'), having a pad back plate (3a, 3'a), to which a friction mass (3b, 3'b) is fitted, an application device (ZV) and a brake-pad wear-measurement system (6, 6'), **characterised in that** the brake-pad wear-measurement system (6, 6') is designed according to any one of claims 1 to 18.

**20.** A brake-pad set for a brake, having at least two brake pads (3, 3') each of which having a pad back plate (3a, 3'a), to which a friction mass (3b, 3'b) is fitted, wherein the brake has a brake-pad wear-measurement system (6) according to claim 7, wherein at least one of the at least two brake pads (3, 3') has at least two electroconductive contact strips (7, 8 and 9, 10) that are arranged in and/or on the friction mass (3b, 3'b) and are in electroconductive contact with the friction mass (3b, 3'b), wherein the friction mass (3b, 3'b) and the contact strips (7, 8 and 9, 10) are arranged such that they are electrically insulated from the pad back plate (3a, 3'a) by an insulator (16), and wherein one of the at least two contact strips (7, 8 and 9, 10) is arranged in a lateral region of the friction mass (3b, 3'b) of the at least one brake pad (3, 3') such that the friction mass (3b, 3'b) extends between them in a longitudinal direction of the at least one brake pad (3, 3'), **characterised in that** at least one of the at least two brake pads (3, 3') has at least one further contact strip (24) that is arranged between the at least two contact strips (7, 8 and 9, 10) in the longitudinal direction of the friction mass (3b, 3'b).

**21.** A brake-pad set for a brake, having at least two brake pads (3, 3') each of which having a pad back plate (3a, 3'a), to which a friction mass (3b, 3'b) is fitted, wherein the brake has a brake-pad wear-measurement system (6) according to claim 18, **characterised in that** at least one of the at least two brake pads (3, 3') has an electrode plate (29) between the friction mass (3b, 3'b) and the pad back plate (3a, 3'a), wherein the electrode plate (29) is arranged such that it is electrically insulated from the pad back plate (3a, 3'a) by an insulator (16) and electrically insulated from the friction mass (3b, 3'b) by a further insulator (16a).

## Revendications

**1.** Dispositif (6) de mesure de l'usure des garnitures d'un frein, comprenant au moins une garniture (3, 3') de frein, ayant une plaque (3a, 3'a) arrière de garniture, sur laquelle est déposée une composition (3b, 3'b) de friction et une unité (11) d'analyse, l'unité (11) d'analyse du dispositif (6, 6') de mesure de l'usure des garnitures a un premier appareil (11a) de mesure, dans lequel le premier appareil (11a) de mesure est en coopération avec la composition (3b, 3'b) de friction de la au moins une garniture (3, 3') de frein et détecte indirectement une épaisseur (h) de garniture de la composition (3b, 3'b) de friction de la au moins une garniture (3, 3') de frein, le premier appareil (11a) de mesure étant relié d'une manière conductrice de l'électricité à la composition (3b, 3'b) de friction de la au moins une garniture (3, 3') de frein, étant conçu comme un appareil de mesure de résistance et détectant indirectement l'épaisseur (h) de garniture de la composition (3b, 3'b) de friction de la au moins une garniture (3, 3') de frein est détectée indirectement par la mesure d'une résistance (R1, R'1) électrique de la composition (3b, 3'b) de friction, dans lequel le premier appareil (11a) de mesure est relié, d'une manière conductrice de l'électricité, à la composition (3b, 3'b) de friction de la au moins une garniture (3, 3') de frein par au moins deux bandes (7, 8 et 9, 10) de contact conductrices de l'électricité, **caractérisé en ce que** les au moins deux bandes (7, 8 et 9, 10) de contact conductrices de l'électricité sont disposées dans et/ou sur la composition (3b, 3'b) de friction de la au moins une garniture (3, 3') de frein et sont en contact d'une manière conductrice de l'électricité avec la composition (3b, 3'b) de friction de la au moins une garniture (3, 3') de frein, dans lequel chaque bande (7, 8, 9, 10) de contact a un corps (12), un tronçon (13) de connexion et une surface (14) de contact conductrice de l'électricité qui est en contact d'une manière conductrice de l'électricité avec la composition (3b, 3'b) de friction, dans lequel le tronçon (13) de connexion de chaque bande (7, 8, 9, 10) de contact est disposé à une extrémité supérieure du corps (12), qui fait saillie de la composition (3b, 3'b) de friction et est relié d'une manière conductrice de l'électricité à la surface (14) de contact, dans lequel le tronçon (13) de connexion de chaque bande (7, 8, 9, 10) de contact est conformé en connecteur (par ex. pour un raccordement à plat) ou est dans une liaison à coopération de matière avec une ligne (7a, 8a, 9a, 10a) respective de connexion, qui est reliée d'une manière conductrice de l'électricité au premier appareil (11a) de mesure, et **en ce que** les surfaces (14) de contact des bandes (7, 8, 9, 10) de contact ont chacune des trous comme ouvertures (17) de passage dans les bandes (7, 8, 9, 10) de contact, une surface de bande rugueuse et/ou des saillies (18, 19) qui dépassent et qui sont en contact d'une manière conductrice de l'électricité avec la composition (3b, 3'b) de friction,

2. Dispositif (6) de mesure de l'usure des garnitures d'un frein, comprenant au moins une garniture (3, 3') de frein avec une plaque (3a, 3'a) arrière de garniture sur laquelle est déposée une composition (3b, 3'b) de friction, et une unité (11) d'analyse, dans lequel l'unité (11) d'analyse du dispositif (6, 6') de mesure d'usure de garniture a un premier appareil (11a) de mesure, dans lequel le premier appareil (11a) de mesure coopère avec la composition (3b, 3'b) de friction de la au moins une garniture (3, 3') de frein et détecte indirectement une épaisseur (h) de garniture de la composition (3b, 3'b) de friction de la au moins une garniture (3, 3') de frein, dans lequel le premier appareil (11a) de mesure est relié d'une manière conductrice de l'électricité à la composition (3b, 3'b) de friction de la au moins une garniture (3, 3') de frein, est conçu comme un appareil de mesure de résistance et détecte indirectement l'épaisseur (h) de garniture de la composition (3b, 3'b) de friction de la au moins une garniture (3, 3') de frein indirectement par la mesure d'une résistance (R1, R'1) électrique de la composition (3b, 3'b) de friction, **caractérisé en ce que** le premier appareil (11a) de mesure est relié d'une manière conductrice de l'électricité à la composition (3b, 3'b) de friction de la au moins une garniture (3, 3') de frein par au moins deux bandes (7, 8 et 9, 10) de contact conductrices de l'électricité, et **en ce qu'**au moins une autre bande (24) de contact est disposée dans la direction longitudinale de la composition (3b, 3'b) de friction entre les au moins deux bandes (7, 8 et 9, 10) de contact.

3. Dispositif (6) de mesure de l'usure des garnitures pour un frein, comprenant au moins une garniture (3, 3') de frein avec une plaque (3a, 3'a) arrière de garniture sur laquelle est déposée une composition (3b, 3'b) de friction, et une unité (11) d'analyse, dans lequel l'unité (11) d'analyse du dispositif (6, 6') de mesure d'usure de garniture a un premier appareil (11a) de mesure, dans lequel le premier appareil (11a) de mesure est en coopération avec la composition (3b, 3'b) de friction de la au moins une garniture (3, 3') de frein et détecte indirectement une épaisseur (h) de garniture de la composition (3b, 3'b) de friction de la au moins une garniture (3, 3') de frein, dans lequel le premier appareil (11a) de mesure est relié d'une manière conductrice de l'électricité à la composition (3b, 3'b) de friction de la au moins une garniture (3, 3') de frein, est constitué sous le forme d'un appareil de mesure de résistance et détecte indirectement l'épaisseur (h) de garniture de la composition (3b, 3'b) de friction de la au moins une garniture (3, 3') de frein est détectée indirectement par la mesure d'une résistance (R1, R'1) électrique de la composition (3b, 3'b) de friction, **caractérisé en ce que** le premier appareil (11a) de mesure est relié d'une manière conductrice de l'électricité à la composition (3b, 3'b) de friction de la au moins une garniture (3, 3') de frein par au moins deux bandes (7, 8 et 9, 10) de contact conductrices de l'électricité, et **en ce qu'**au moins l'une des bandes (7, 8, 9, 10, 14) de contact est reliée au premier appareil (11a) de mesure par un câble à thermocouple, dans lequel le dispositif (6) de mesure de l'usure des garnitures a un circuit d'analyse pour déterminer une température de la composition (3b, 3'b) de friction à partir des valeurs électriques fournies par le câble à thermocouple.

4. Dispositif (6) de mesure de l'usure des garnitures selon l'une des revendications 2 à 3, **caractérisé en ce que** les au moins deux bandes (7, 8 et 9, 10) de contact conductrices de l'électricité sont disposées dans et/ou sur la composition (3b, 3'b) de friction de la au moins une garniture (3, 3') de frein et sont en contact d'une manière conductrice de l'électricité avec la composition (3b, 3'b) de friction de la au moins une garniture (3, 3') de frein.

5. Dispositif (6) de mesure de l'usure des garnitures selon la revendication 1 ou 4, **caractérisé en ce que** la composition (3b, 3'b) de friction de la au moins une garniture (3, 3') de frein et les bandes (7, 8 et 9, 10) de contact sont isolées électriquement de la plaque (3a, 3'a) arrière de garniture de la au moins une garniture (3, 3') de frein par une isolation (16).

6. Dispositif (6) de mesure de l'usure des garnitures selon la revendication 1, 4 ou 5, **caractérisé en ce que** parmi les au moins deux bandes (7, 8 et 9, 10) de contact, chacune est disposée dans une partie latérale de la composition (3b, 3'b) de friction de la au moins une garniture (3, 3') de frein de telle sorte que la composition (3b, 3'b) de friction s'étend entre elles dans une direction longitudinale de la au moins une garniture (3, 3') de frein.

7. Dispositif (6) de mesure de l'usure des garnitures selon l'une des revendications 2 à 6, **caractérisé en ce que** chaque bande (7, 8, 9, 10) de contact a un corps (12), un tronçon (13) de connexion et une surface (14) de contact conductrice de l'électricité qui est en contact d'une manière conductrice de l'électricité avec la composition (3b, 3'b) de friction.

8. Dispositif (6) de mesure de l'usure des garnitures selon la revendication 7, **caractérisé en ce que** le tronçon (13) de connexion de chaque bande (7, 8, 9, 10) de contact est disposé à une extrémité supérieure du corps (12) qui fait saillie de la composition (3b, 3'b) de friction et est relié d'une manière conductrice de l'électricité à la surface (14) de contact.

9. Dispositif (6) de mesure de l'usure des garnitures selon la revendication 8, **caractérisé en ce que** le tronçon (13) de connexion de chaque bande (7, 8, 9, 10) de contact est conformé en connecteur (par ex. pour un raccordement à plat) ou est dans une liaison à coopération de matière avec une ligne (7a, 8a, 9a, 10a) respective de connexion, qui est reliée d'une manière conductrice de l'électricité au premier appareil (11a) de mesure.

10. Dispositif (6) de mesure de l'usure des garnitures selon l'une des revendications 7 à 9, **caractérisé en ce que** les surfaces (14) de contact des bandes (7, 8, 9, 10) de contact ont chacune des trous comme ouvertures (17) de passage dans les bandes (7, 8, 9, 10) de contact, une surface de bande rugueuse et/ou des saillies (18, 19) qui dépassent et qui sont en contact d'une manière conductrice de l'électricité avec la composition (3b, 3'b) de friction.

11. Dispositif (6) de mesure de l'usure des garnitures selon la revendication 1 ou l'une des revendications 7 à 10, **caractérisé en ce que** les bandes (7, 8, 9, 10) de contact sont insérées chacune dans un évidement (15) comme sous la forme d'un creux dans un côté (3c) de garniture de la plaque (3a, 3'a) arrière de garniture et/ou respectivement dans des évidements (15a) dans la composition (3b, 3'b) de friction.

12. Dispositif (6) de mesure de l'usure des garnitures selon la revendication 1 ou l'une des revendications 3 à 11, **caractérisé en ce qu'au** moins une autre bande (24) de contact est disposée dans le sens longitudinal de la composition (3b, 3'b) de friction entre les au moins deux bandes (7, 8 et 9, 10) de contact.

13. Dispositif (6) de mesure de l'usure des garnitures selon l'une des revendications 1 à 12, **caractérisé en ce que** le dispositif (6) de mesure de l'usure des garnitures a un deuxième appareil (11b) de mesure, dans lequel le deuxième appareil (11b) de mesure a un circuit amplificateur et/ou un circuit comparateur.

14. Dispositif (6) de mesure de l'usure des garnitures selon l'une des revendications précédentes, **caractérisé en ce que** le dispositif (6) de mesure de l'usure des garnitures a un affichage (AZ).

15. Dispositif (6) de mesure de l'usure des garnitures selon l'une des revendications 1 à 14, **caractérisé en ce que** le dispositif (6) de mesure de l'usure des garnitures a un circuit d'analyse pour déterminer une température de la composition (3b, 3'b) de friction à partir des valeurs de résistance mesurées de la composition (3b, 3'b) de friction.

16. Dispositif (6) de mesure de l'usure des garnitures selon l'une des revendications 1 à 2 ou l'une des revendications 4 à 15, **caractérisé en ce qu'**au moins l'une des bandes (7, 8, 9, 10, 14) de contact est reliée au premier appareil (11a) de mesure par un câble à thermocouple, dans lequel le dispositif (6) de mesure de l'usure des garnitures a un circuit d'analyse pour la détermination d'une température de la composition (3b, 3'b) de friction à partir des valeurs électriques fournies par le câble à thermocouple.

17. Dispositif (6) de mesure de l'usure des garnitures selon l'une des revendications précédentes, **caractérisé en ce qu'**une variation brusque de la valeur de résistance mesurée de la composition (3b, 3'b) de friction peut être mesurée sur les bandes (7, 8, 9, 10, 14) de contact si la composition (3b, 3'b) de friction de la au moins une garniture (3, 3') de frein vient en contact avec un disque de frein (2) ou un tambour de frein d'un frein à associer.

18. Dispositif (6) de mesure de l'usure des garnitures pour un frein, comprenant au moins une garniture (3, 3') de frein ayant une plaque (3a, 3'a) arrière de garniture sur laquelle est déposée une composition (3b, 3'b) de friction, et une unité (11) d'analyse, dans lequel l'unité (11) d'analyse du dispositif de mesure d'usure des garnitures (6, 6') a un premier appareil (11a) de mesure, dans lequel le premier appareil (11a) de mesure est en coopération avec la composition (3b, 3'b) de friction de la au moins une garniture (3, 3') de frein et détecte indirectement une épaisseur (h) de garniture de la composition (3b, 3'b) de friction de la au moins une garniture (3, 3') de frein, dans lequel le premier appareil (11a) de mesure est constitué sous la forme d'un appareil de mesure d'une capacité et est connecté d'une manière conductrice de l'électricité à un enregistreur (30) de mesure capacitif, dans lequel l'enregistreur (30) de mesure capacitif a une capacité variable C qui est formée à partir d'une plaque (29) formant électrode de la au moins une garniture (3, 3') de frein de la composition (3b, 3'b) de friction de la au moins une garniture (3, 3') de frein comme diélectrique de la capacité C et d'un disque de frein (2) ou d'un tambour de frein d'un frein à associer, dans lequel le premier appareil (11a) de mesure détecte indirectement l'épaisseur (h) de garniture de la composition (3b, 3'b) de friction de la au moins une garniture (3, 3') de frein en mesurant la capacité C de l'enregistreur (30) de mesure capacitif, **caractérisé en ce que** la plaque (29) formant électrode est disposée de manière isolée électriquement par une isolation (16) par rapport à la plaque (3a, 3'a) arrière de garniture de la au moins une garniture (3, 3') de frein et par une autre isolation (16a) par rapport à la composition (3b, 3'b) de friction de la au moins une garniture (3, 3') de frein.

19. Frein comportant au moins une garniture (3, 3') de frein avec une plaque (3a, 3'a) arrière de garniture sur laquelle est déposée une composition (3b, 3'b) de friction, un dispositif (ZV) de serrage et un dispositif (6, 6') de mesure de l'usure des garnitures, **caractérisé en ce que** le dispositif (6, 6') de mesure de l'usure des garnitures est conçu selon l'une des revendications 1 à 18.

20. Jeu de garnitures d'un frein, comprenant au moins deux garnitures (3, 3') de frein comportant chacune une plaque arrière de garniture (3a, 3'a) sur laquelle est déposée une composition (3b, 3'b) de friction, dans lequel le frein a un dispositif (6) de mesure d'usure des garnitures selon la revendication 7, dans lequel au moins l'une des au moins deux garnitures (3, 3') de frein a au moins deux bandes (7, 8 et 9, 10) de contact conductrices de l'électricité disposées dans et/ou sur la composition (3b, 3'b) de friction, qui sont en contact d'une manière conductrice de l'électricité avec la composition (3b, 3'b) de friction, dans lequel la composition (3b, 3'b) de friction et les bandes (7, 8 et 9, 10) de contact sont disposées de manière électriquement isolée par rapport à la plaque (3a, 3'a) arrière de garniture par une isolation (16), et dans lequel parmi les au moins deux bandes (7, 8 et 9, 10) de contact, au moins une est disposée dans une partie latérale de la composition (3b, 3'b) de friction de la au moins une garniture (3, 3') de frein de sorte que la composition (3b, 3'b) de friction s'étende entre elles dans une direction longitudinale de la au moins une garniture (3, 3') de frein, **caractérisé en ce qu'**au moins l'une des au moins deux garnitures (3, 3') de frein a au moins une autre bande (24) de contact qui est disposée dans la direction longitudinale de la composition (3b, 3'b) de friction entre les au moins deux bandes (7, 8 et 9, 10) de contact.

21. Jeu de garnitures d'un frein, comprenant au moins deux garnitures (3, 3') de frein avec chacune une plaque (3a, 3'a) arrière de garniture sur laquelle est déposée une composition (3b, 3'b) de friction, dans lequel le frein a un dispositif (6, 6') de mesure d'usure des garnitures selon la revendication 18, **caractérisé en ce qu'**au moins l'une des au moins deux garnitures (3, 3') de frein a une plaque (29) formant électrode entre la composition (3b, 3'b) de friction et la plaque (3a, 3'a) arrière de garniture, dans lequel la plaque formant électrode (29) est disposée de manière isolée électriquement par rapport à la plaque (3a, 3'a) arrière de garniture par une isolation (16) et par rapport à la composition (3b, 3'b) de friction par une autre isolation (16a).

# Fig. 1

Fig. 2

Fig. 3

# Fig. 4

3;3'

3b;3'b    14    7;10    16    3a;3'a

15a

15a

14

8;9

x
y ← z ---→ y

# Fig. 5

7;10    13

R1,R'1

13

8;9

# Fig. 6

Fig. 7          Fig. 8          Fig. 9

EP 3 743 636 B2

Fig. 10          Fig. 11

# Fig. 12

# Fig. 13

# Fig. 14

Fig. 15

EP 3 743 636 B2

## Fig. 16

## Fig. 17

EP 3 743 636 B2

# Fig. 18

# Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H109307 A
- DE 102012108672 B3
- DE 102011113526 B4
- DE 4231107 A1
- EP 1645771 A2
- US 8739938 B2
- DE 102014105561 A1
- CN 106641031 A
- US 6302241 B1

**In der Beschreibung aufgeführte Nicht-Patentliteratur**

- **J. NIEBUHR**. Physikalische Messtechnik mit Sensoren. Oldenburg Industrieverlag, 193ff
- **TIETZE/SCHENK**. Halbleiter-Schaltungstechnik. Springer-Verlag, 1980, 419ff